# EUROPEAN PATENT APPLICATION

(11) **EP 4 810 444 A1**
(43) Date of publication of application: **23.09.2026**
(21) Application number: 24891507.6
(22) Date of filing: 15.11.2024
(51) Int. Cl.: C01F 5/02, C09C 3/00

(54) **MAGNESIUM OXIDE**

(30) Priority: 17.11.2023 JP 2023195994; 07.08.2024 JP 2024130916; 07.08.2024 JP 2024130924
(71) Applicant: SETOLAS Holdings, Inc., Takamatsu-shi, Kagawa 760-0026 (JP)
(72) Inventor: ONO, Shinji, Sakaide-shi, Kagawa 762-0012 (JP)
(74) Representative: Vossius & Partner Patentanwälte Rechtsanwälte mbB
(86) International application number: PCT/JP2024/040659
(87) International publication number: WO 2025/105472

(57) **Abstract**

An object of the present disclosure is to provide magnesium oxide having good moisture resistance. The magnesium oxide of the present disclosure has a dyne value of less than 50 mN/m and has a specific surface area of 0.01 m²/g or more and less than 1.3 m²/g.

## Description

### TECHNICAL FIELD

The present disclosure relates to magnesium oxide.

### BACKGROUND ART

Magnesium oxide can be used for a thermally conductive material, a heat-resistant material, an electrical insulating material, a filler, an optical material, an abrasive, and the like. Patent Document 1 describes a method for producing magnesium oxide in which magnesium hydroxide having a prescribed particle size and a prescribed BET specific surface area is calcined at 1100 to 1600°C, to be pulverized and classified to a secondary particle size of 20 µm or less.

Patent Document 2 describes a thermally conductive filler which is magnesium oxide having a prescribed BET specific surface area and a prescribed average secondary particle size and surface-coated, at 1 to 10 mass% with respect to the magnesium oxide, with a coating agent represented by (CₖH₍₂ₖ₊₁₎)ₙ-Si(OCₘH₍₂ₘ₊₁₎)₍₄₋ₙ₎ [k: 6 or more, m: 2 or less, n: 1 to 3].

### PRIOR ART DOCUMENTS

### PATENT DOCUMENTS

Patent Document 1: JP-A-H6-171928
Patent Document 2: JP-A-2011-68757

### SUMMARY OF THE INVENTION

### PROBLEMS TO BE SOLVED BY THE INVENTION

An object of the present disclosure is to provide magnesium oxide having good moisture resistance. Preferably, the present disclosure intends to provide magnesium oxide capable of, when mixed with a resin, suppressing the viscosity increase of the mixture. Preferably, the present disclosure intends to provide magnesium oxide capable of, when mixed with a resin, suppressing the torque increase during stirring of the mixture.

### SOLUTIONS TO THE PROBLEMS

Embodiment I-1 of the present disclosure provides magnesium oxide having a dyne value of less than 50 mN/m.

The magnesium oxide may have a specific surface area of 0.01 m²/g or more and less than 1.3 m²/g.

In Embodiment I-2 of the present disclosure, in the Embodiment 1-1, the average particle size of the magnesium oxide may be 0.5 µm or more and 50 µm or less.

In Embodiment I-3 of the present disclosure, in any one of the descriptions in Embodiments I-1 and I-2, the magnesium oxide may have a surface treatment layer.

In Embodiment I-3 of the present disclosure, in any one of the descriptions in Embodiments I-1 and I-2, the surface treatment layer may be formed using a surface treatment agent comprising a silane coupling agent.

In Embodiment I-4 of the present disclosure, in any one of the descriptions in Embodiment I-3, the silane coupling agent may comprise a compound represented by the following formula (1):

R¹ₙ-Si(OR²)ₘ ··· (1).

R¹ in formula (1) may independently represent -L¹-R³.

L¹ in formula (1) may independently represent a single bond or a divalent organic group.

R³ in formula (1) may independently represent one selected from a group consisting of a C₁₋₃₀ alkyl group, a C₂₋₃₀ alkenyl group, a C₆₋₃₀ aromatic hydrocarbon group, and an -SiR⁴₃ group.

R⁴ in formula (1) may independently represent a C₁₋₆ hydrocarbon group.

R² in formula (1) may independently represent a C₁₋₄ alkyl group or a hydrogen atom.

n in formula (1) may represent an integer of 1 to 3.

m in formula (1)
may represent an integer of 1 to 3.

In Embodiment I-5 of the present disclosure, in any one description of Embodiments I-3 and I-4,
a value rₛ represented by the following formula (2) may be 100% or more and 4,000% or less,
[Math 1] ${r}_{s} = \frac{{n}_{s} \left(mol\right) \times {N}_{A} \left({mol}^{- 1}\right) \times {S}_{s} \left({m}^{2}\right)}{{m}_{m} \left(g\right) \times {s}_{m} \left({m}^{2}⋅{g}^{- 1}\right)}$ in formula (2),
nₛ represents a substance amount (mol) of the silane coupling agent,
N_{A} represents an Avogadro number (mol⁻¹),
Sₛ represents an occupancy area (m²) of one molecule of the silane coupling agent,
mₘ represents an addition amount (g) of the magnesium oxide, and
sₘ represents a specific surface area (m²·g⁻¹) of the magnesium oxide.

Embodiment I-6 of the present disclosure provides magnesium oxide that exhibits a torque of 50 N·m or less as measured by the following method.

Further, in Embodiment I-6 of the present disclosure, in any one of the descriptions in Embodiments I-1 to I-5, the torque measured by the following method may be 50 N·m or less.

### [Method of torque measurement]

After an ethylene-octene-based polyolefin resin is heated to 120°C and kneaded for 10 minutes; the magnesium oxide is added to the ethylene-octene-based polyolefin resin such that a volume ratio of the ethylene-octene-based polyolefin resin to the magnesium oxide is 51 : 49; the mixture is further kneaded at 120°C for 15 minutes, and a torque thereof (N·m) is measured at a rotation speed of 30 rpm.

In Embodiment I-7 of the present disclosure, in any one of the descriptions in Embodiments I-1 to I-6, the magnesium oxide may have a surface treatment layer.

The surface treatment layer may be formed using a surface treatment agent comprising a silane coupling agent.

The silane coupling agent may comprise a compound represented by the following formula (1):

R¹ₙ-Si(OR²)ₘ ··· (1).

R¹ in formula (1) may independently represent -L¹-R³.

L¹ in formula (1) may independently represent a single bond or a divalent organic group.

R³ in formula (1) may independently represent one selected from a C₁₋₃₀ alkyl group, a C₂₋₃₀ alkenyl group, a C₆₋₃₀ aromatic hydrocarbon group, and an -SiR⁴₃ group, and preferably may independently represent one selected from a C₁₋₃₀ alkyl group and a C₂₋₃₀ alkenyl group.

R⁴ in formula (1) may independently represent a C₁₋₆ hydrocarbon group.

R² in formula (1) may independently represent a C₁₋₄ alkyl group or a hydrogen atom.

n in formula (1) may represent an integer of 1 to 3.

m in formula (1) may represent an integer of 1 to 3.

Embodiment I-8 of the present disclosure provides magnesium oxide having a viscosity of 70 Pa·s or less as measured by the following method.

In addition, in Embodiment I-8 of the present disclosure, in any one of the descriptions in Embodiments I-1 to I-7, the viscosity measured by the following method may be 70 Pa·s or less.

### [Method of viscosity measurement]

A bisphenol-type epoxy resin and the magnesium oxide are mixed at a volume ratio of 70 : 30. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 25°C, a gap distance of 1 mm, a measurement shear rate range of 0 to 20 s⁻¹, and a measurement time of 20 seconds.

In Embodiment I-9 of the present disclosure, in any one of the descriptions in Embodiments I-1 to I-8, the magnesium oxide may have a surface treatment layer.

The surface treatment layer may be formed using a surface treatment agent comprising a silane coupling agent.

The silane coupling agent may comprise a compound represented by the following formula (1):

R¹ₙ-Si(OR²)ₘ ··· (1).

R¹ in formula (1) may independently represent -L¹-R³.

L¹ in formula (1) may independently represent a single bond or a divalent organic group.

R³ in formula (1) may independently represent one selected from a group consisting of a C₁₋₃₀ alkyl group, a C₂₋₃₀ alkenyl group, a C₆₋₃₀ aromatic hydrocarbon group, and an -SiR⁴₃ group, and preferably may represent independently at each occurrence one selected from a group consisting of a C₂₋₃₀ alkenyl group and a C₆₋₃₀ aromatic hydrocarbon group.

R⁴ in formula (1) may independently represent a C₁₋₆ hydrocarbon group.

R² in formula (1) may independently represent a C₁₋₄ alkyl group or a hydrogen atom.

n in formula (1) may represent an integer of 1 to 3.

m in formula (1) may represent an integer of 1 to 3.

Embodiment I-10 of the present disclosure provides magnesium oxide having a viscosity of 19 Pa·s or less as measured by the following method.

In addition, in Embodiment I-10 of the present disclosure, in any one of the descriptions in Embodiments I-1 to I-9, the viscosity measured by the following method may be 70 Pa·s or less.

### [Method of viscosity measurement]

A polyfunctional acrylic monomer and the magnesium oxide are mixed at a volume ratio of 60 : 40. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 23°C, a gap distance of 1 mm, a measurement shear rate range of 0 to 20 s⁻¹, and a measurement time of 20 seconds.

In Embodiment I-11 of the present disclosure, in any one of the descriptions in Embodiments I-1 to I-10, the magnesium oxide may have a surface treatment layer.

The surface treatment layer may be formed using a surface treatment agent comprising a silane coupling agent.

The silane coupling agent may comprise a compound represented by the following formula (1):

R¹ₙ-Si(OR²)ₘ ··· (1).

R¹ in formula (1) may independently represent -L¹-R³.

L¹ in formula (1) may independently represent a single bond or a divalent organic group.

R³ in formula (1) may independently represent one selected from a group consisting of a C₁₋₃₀ alkyl group, a C₂₋₃₀ alkenyl group, a C₆₋₃₀ aromatic hydrocarbon group, and an -SiR⁴₃ group, and preferably may represent independently at each occurrence one selected from a group consisting of a C₂₋₃₀ alkenyl group and a C₆₋₃₀ aromatic hydrocarbon group.

R⁴ in formula (1) may independently represent a C₁₋₆ hydrocarbon group.

R² in formula (1) may independently represent a C₁₋₄ alkyl group or a hydrogen atom.

n in formula (1) may represent an integer of 1 to 3.

m in formula (1) may represent an integer of 1 to 3.

Embodiment I-12 of the present disclosure provides a method for producing magnesium oxide, comprising subjecting first magnesium oxide to a surface treatment using a surface treatment agent comprising a silane coupling agent to obtain second magnesium oxide having a surface treatment layer,
wherein the surface treatment is conducted by a wet treatment.

In Embodiment I-13 of the present disclosure, in Embodiment I-12, the surface treatment may be conducted by a treatment method comprising mixing an organic solvent and first magnesium oxide to obtain a first mixed liquid.

The treatment method may comprise mixing the surface treatment agent and the first mixed liquid to obtain a second mixed liquid.

The treatment method may comprise removing the organic solvent from the second mixed liquid to obtain a precursor of second magnesium oxide.

The treatment method may comprise heating and/or drying the precursor of second magnesium oxide to obtain second magnesium oxide having a surface treatment layer.

Embodiment I-14 of the present disclosure provides a heat dissipation member comprising the magnesium oxide according to any one of Embodiments I-1 to I-11.

Embodiment I-15 of the present disclosure provides a heat dissipation filler comprising the magnesium oxide according to any one of Embodiments I-1 to I-11.

Embodiment I-16 of the present disclosure provides an apparatus comprising the heat dissipation member according to any one of Embodiment I-14.

Embodiment II-1 of the present disclosure provides magnesium oxide having a dyne value of less than 45 mN/m.

In Embodiment II-2 of the present disclosure, in Embodiment II-1, the magnesium oxide may have a specific surface area of 1.3 m²/g or more and 10 m²/g or less.

In Embodiment II-3 of the present disclosure, in any one of the descriptions in Embodiments II-1 and II-2, the average particle size of the magnesium oxide may be 0.5 µm or more and 50 µm or less.

In Embodiment II-4 of the present disclosure, in any one of the descriptions in Embodiments II-1 and II-2, the magnesium oxide may have a surface treatment layer.

The surface treatment layer may be formed using a surface treatment agent comprising a silane coupling agent.

In Embodiment II-5 of the present disclosure, in any one of the descriptions in Embodiment II-4, the silane coupling agent may comprise a compound represented by the following formula (1):

R¹ₙ-Si-(OR²)ₘ··· (1).

R¹ in formula (1) may independently represent -L¹-R³.

L¹ in formula (1) may independently represent a single bond or a divalent organic group.

R³ in formula (1) may independently represent one selected from a group consisting of a C₁₋₃₀ alkyl group, a C₂₋₃₀ alkenyl group, a C₆₋₃₀ aromatic hydrocarbon group, and an -SiR⁴₃ group.

R⁴ in formula (1) may independently represent at each occurrence a C₁₋₆ hydrocarbon group.

R² in formula (1) may independently represent a C₁₋₄ alkyl group or a hydrogen atom.

n in formula (1) may represent an integer of 1 to 3.

m in formula (1) may represent an integer of 1 to 3.

In Embodiment II-6 of the present disclosure, in any one of the descriptions in Embodiments II-4 and II-5,
a value rₛ represented by the following formula (2) may be 40% or more and 500% or less,
[Math 2] ${r}_{s} = \frac{{n}_{s} \left(mol\right) \times {N}_{A} \left({mol}^{- 1}\right) \times {S}_{s} \left({m}^{2}\right)}{{m}_{m} \left(g\right) \times {s}_{m} \left({m}^{2}⋅{g}^{- 1}\right)}$ in formula (2),
nₛ represents a substance amount (mol) of the silane coupling agent,
N_{A} represents an Avogadro number (mol⁻¹),
Sₛ represents an occupancy area (m²) of one molecule of the silane coupling agent,
mₘ represents an addition amount (g) of the magnesium oxide, and
sₘ represents a specific surface area (m²·g⁻¹) of the magnesium oxide.

Embodiment II-7 of the present disclosure provides magnesium oxide having a torque of 53 N·m or less as measured by the following method.

In addition, in Embodiment II-7 of the present disclosure, in any one of the descriptions in Embodiments II-1 to II-6, the torque measured by the following method may be 53 N·m or less.

### [Method of torque measurement]

After an ethylene-octene-based polyolefin resin is heated to 120°C and kneaded for 10 minutes; the magnesium oxide is added to the ethylene-octene-based polyolefin resin such that a volume ratio of the ethylene-octene-based polyolefin resin to the magnesium oxide is 51 : 49; the mixture is further kneaded at 120°C for 15 minutes, and a torque thereof (N·m) is measured at a rotation speed of 30 rpm.

In Embodiment II-8 of the present disclosure, in any one of the descriptions in Embodiments II-1 to II-7, the magnesium oxide may have a surface treatment layer.

The surface treatment layer may be formed using a surface treatment agent comprising a silane coupling agent.

The silane coupling agent may comprise a compound represented by the following formula (1):

R¹ₙ-Si-(OR²)ₘ ··· (1).

R¹ in formula (1) may independently represent -L¹-R³.

L¹ in formula (1) may independently represent a single bond or a divalent organic group.

R³ in formula (1) may independently represent one selected from a group consisting of a C₁₋₃₀ alkyl group, a C₂₋₃₀ alkenyl group, a C₆₋₃₀ aromatic hydrocarbon group, and an -SiR⁴₃ group, and preferably may represent independently at each occurrence one selected from a group consisting of a C₁₋₃₀ alkyl group and an -SiR⁴₃ group.

R⁴ in formula (1) may independently represent a C₁₋₆ hydrocarbon group.

R² in formula (1) may independently represent a C₁₋₄ alkyl group or a hydrogen atom.

n in formula (1) may represent an integer of 1 to 3.

m in formula (1) may represent an integer of 1 to 3.

Embodiment II-9 of the present disclosure provides magnesium oxide having a viscosity of 130 Pa·s or less as measured by the following method.

In Embodiment II-9 of the present disclosure, in any one of the descriptions in Embodiments II-1 to II-8, the viscosity measured by the following method may be 130 Pa·s or less.

### [Method of viscosity measurement]

A bisphenol-type epoxy resin and the magnesium oxide are mixed at a volume ratio of 70 : 30. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 25°C, a gap distance of 1 mm, a measurement shear rate range of 0 to 20 s⁻¹, and a measurement time of 20 seconds.

In Embodiment II-10 of the present disclosure, in any one of the descriptions in Embodiments II-1 to II-9, the magnesium oxide may have a surface treatment layer.

The surface treatment layer may be formed using a surface treatment agent comprising a silane coupling agent.

The silane coupling agent may comprise a compound represented by the following formula (1):

R¹ₙ-Si-(OR²)ₘ ··· (1).

R¹ in formula (1) may independently represent -L¹-R³.

L¹ in formula (1) may independently represent a single bond or a divalent organic group.

R³ in formula (1) may independently represent one selected from a group consisting of a C₁₋₃₀ alkyl group, a C₂₋₃₀ alkenyl group, a C₆₋₃₀ aromatic hydrocarbon group, and an -SiR⁴₃ group, and preferably may represent one selected from a group consisting of a C₂₋₃₀ alkenyl group and a C₆₋₃₀ aromatic hydrocarbon group.

R⁴ in formula (1) may independently represent at each occurrence a C₁₋₆ hydrocarbon group.

R² in formula (1) may independently represent at each occurrence a C₁₋₄ alkyl group or a hydrogen atom.

n in formula (1) may represent an integer of 1 to 3.

m in formula (1) may represent an integer of 1 to 3.

Embodiment II-11 of the present disclosure provides magnesium oxide having a viscosity of 27 Pa·s or less as measured by the following method.

In Embodiment II-11 of the present disclosure, in any one of the descriptions in Embodiments II-1 to II-10, the viscosity measured by the following method may be 27 Pa·s or less.

### [Method of viscosity measurement]

A polyfunctional acrylic monomer and the magnesium oxide are mixed at a volume ratio of 60 : 40. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 23°C, a gap distance of 1 mm, a measurement shear rate range of 0 to 20 s⁻¹, and a measurement time of 20 seconds.

In Embodiment II-12 of the present disclosure, in any one of the descriptions in Embodiments II-1 to II-11, the magnesium oxide may have a surface treatment layer.

The surface treatment layer may be formed using a surface treatment agent comprising a silane coupling agent.

The silane coupling agent may comprise a compound represented by the following formula (1):

R¹ₙ-Si-(OR²)ₘ ··· (1).

R¹ in formula (1) may independently represent -L¹-R³.

L¹ in formula (1) may independently represent a single bond or a divalent organic group.

R³ in formula (1) may independently represent one selected from a group consisting of a C₁₋₃₀ alkyl group, a C₂₋₃₀ alkenyl group, a C₆₋₃₀ aromatic hydrocarbon group, and an -SiR⁴₃ group, and preferably may represent independently at each occurrence one selected from a group consisting of a C₂₋₃₀ alkenyl group and a C₆₋₃₀ aromatic hydrocarbon group.

R⁴ in formula (1) may independently represent a C₁₋₆ hydrocarbon group.

R² in formula (1) may independently represent a C₁₋₄ alkyl group or a hydrogen atom.

n in formula (1) may represent an integer of 1 to 3.

m in above formula (1) may represent an integer of 1 to 3.

Embodiment II-13 of the present disclosure provides a method for producing magnesium oxide, comprising subjecting first magnesium oxide to a surface treatment using a surface treatment agent comprising a silane coupling agent to obtain second magnesium oxide having a surface treatment layer,

wherein the surface treatment is conducted by a wet treatment.

In Embodiment II-14 of the present disclosure, in Embodiment II-13, the surface treatment may be conducted by a treatment method comprising mixing an organic solvent and first magnesium oxide to obtain a first mixed liquid.

The treatment method may comprise mixing the surface treatment agent and the first mixed liquid to obtain a second mixed liquid.

The treatment method may comprise removing the organic solvent from the second mixed liquid to obtain a precursor of second magnesium oxide.

The treatment method may comprise heating and/or drying the precursor of second magnesium oxide to obtain second magnesium oxide having a surface treatment layer.

Embodiment II-15 of the present disclosure provides a heat dissipation member comprising the magnesium oxide according to any one of Embodiments II-1 to II-12.

Embodiment II-16 of the present disclosure provides a heat dissipation filler comprising the magnesium oxide according to any one of Embodiments II-1 to II-12.

Embodiment II-17 of the present disclosure provides an apparatus comprising the heat dissipation member according to any one of Embodiment II-15.

### EFFECTS OF THE INVENTION

The present disclosure provides magnesium oxide having good moisture resistance. Preferably, the present disclosure provides magnesium oxide capable of suppressing the viscosity increase in the mixture when mixed with a resin. In addition, preferably, the present disclosure provides magnesium oxide capable of suppressing the torque increase during stirring of the mixture when mixed with a resin.

### DETAILED DESCRIPTION

In Aspect I, the magnesium oxide of the present disclosure has a dyne value of less than 50 mN/m.

In Aspect II, the magnesium oxide of the present disclosure has a dyne value of less than 45 mN/m.

Hereinafter, unless otherwise specified, it means that the following description is applicable to both Aspects I and II.

The magnesium oxide of the present disclosure exhibits good moisture resistance. In a preferred aspect, the magnesium oxide of the present disclosure is superior in moisture resistance even after long-term use. Therefore, the generation of Mg(OH)₂ by a reaction between MgO and water may be suppressed, and acid resistance may also improve. The magnesium oxide of the present disclosure exhibits good affinity with a resin and good dispersibility in a resin. As a result, the thermal conductivity of a resin material comprising the magnesium oxide of the present disclosure may improve. While the present disclosure should not be construed as being limited to a particular theory, the reason that the moisture resistance improves in the magnesium oxide of the present disclosure is considered as follows.

That is, the dyne value is a value that can be an index of the surface free energy; the larger the dyne value is, the higher the surface free energy is, whereas the smaller the dyne value is, the lower the surface free energy is. It is considered that in the magnesium oxide of the present disclosure the surface free energy is reduced to suppress the interaction with water, so that the moisture resistance is improved.

In the present disclosure, "magnesium oxide" is not limited to magnesium oxide as a compound, and may comprise a material that comprises magnesium oxide as a main component and has been subjected to a treatment such as a surface treatment. In the present description, magnesium oxide as a compound may be referred to as "MgO". The magnesium oxide (MgO) as a compound may comprise elements such as Ca, Si, Cl, S, Al, and Fe as impurities.

In Aspect I, the dyne value of magnesium oxide may be less than 50 mN/m, preferably 15 mN/m or more and 50 mN/m or less, and more preferably 20 mN/m or more and 45 mN/m or less. The dyne value of the magnesium oxide may preferably be 50 mN/m or less, more preferably 45 mN/m or less, and still more preferably 40 mN/m or less, and may preferably be 15 mN/m or more, and more preferably 20 mN/m or more.

In Aspect II, the dyne value of magnesium oxide may be less than 45 mN/m, preferably 15 mN/m or more and 40 mN/m or less, and more preferably 20 mN/m or more and 35 mN/m or less. The dyne value of the magnesium oxide may preferably be 45 mN/m or less, more preferably 40 mN/m or less, and still more preferably 35 mN/m or less, and may preferably be 15 mN/m or more, and more preferably 20 mN/m or more.

The dyne value of magnesium oxide can be measured by the following method.

### [Method of dyne value measurement]

Solutions having dyne values of 25.4 mN/m, 30.0 mN/m, 35.0 mN/m, 40.0 mN/m, 45.0 mN/m and 50.0 mN/m and water are prepared. 2 mL of each solution is placed in a clean glass container, and the liquid temperature is adjusted at 25°C. As the glass container, a container in which the liquid level height of the solution becomes 5 mm or more from the inner bottom surface is used. Next, the measurement sample is dried at 60°C for 1 hour, and then the temperature of the measurement sample is adjusted to 25°C. Thereafter, 0.01 g of the measurement sample is charged so as to be sprinkled on the surface of each liquid. The lowest dyne value among the dyne values of the liquids at which the entire measurement sample floats on the liquid surface at the point of time when 10 seconds elapse after charging is taken as the dyne value of the sample.

In the present disclosure, the magnesium oxide may preferably be magnesium oxide particles. In the present disclosure, a "particle" represents an assembly of particulate materials independent from each other. The shape of each particle may be a spherical shape, an indefinite shape, or the like. When the shape of each particle is spherical, the "spherical shape" is not limited to a "perfect spherical shape".

In Aspect I, the specific surface area of the magnesium oxide may be 0.01 m²/g or more and less than 1.3 m²/g, preferably 0.05 m²/g or more and 1 m²/g or less, and more preferably 0.1 m²/g or more and 1.0 m²/g or less. The specific surface area of the magnesium oxide may be 0.01 m²/g or more, preferably 0.05 m²/g or more, and more preferably 0.1 m²/g or more, and may be less than 1.3 m²/g, preferably 1 m²/g or less, and more preferably 1.0 m²/g or less. The specific surface area of the magnesium oxide is in the above range facilitates the adjustment of the interface between the magnesium oxide particles and the resin, to suppress the viscosity increase and the torque increase of the mixture when the magnesium oxide is mixed with the resin.

In Aspect II, the specific surface area of the magnesium oxide may preferably be 1.3 m²/g or more and 10 m²/g or less, more preferably 1.3 m²/g or more and 5.0 m²/g or less, and still more preferably 1.3 m²/g or more and 3.0 m²/g or less. The specific surface area of the magnesium oxide may preferably be 1.3 m²/g or more, and may preferably be 10 m²/g or less, more preferably 5.0 m²/g or less, and still more preferably 3.0 m²/g or less. The specific surface area of the magnesium oxide is in the above range facilitates the adjustment of the interface between the magnesium oxide particles and the resin, to suppress the viscosity increase and the torque increase of the mixture when the magnesium oxide is mixed with the resin.

The specific surface area of the magnesium oxide may preferably be 0.01 m²/g or more and 10 m²/g or less, more preferably 0.05 m²/g or more and 5.0 m²/g or less, and still more preferably 0.1 m²/g or more and 3.0 m²/g or less. The specific surface area of the magnesium oxide may preferably be 0.01 m²/g or more, more preferably 0.05 m²/g or more, and still more preferably 0.1 m²/g or more, and may preferably be 10 m²/g or less, more preferably 5.0 m²/g or less, and still more preferably 3.0 m²/g or less.

In the present disclosure, the specific surface area may be measured by the BET method, and specifically, may be measured in accordance with JIS Z 8830.

In Aspect I, the average particle size of the magnesium oxide may preferably be 0.5 µm or more and 50 µm or less, more preferably 1.0 µm or more and 40 µm or less, and still more preferably 1.5 µm or more and 35 µm or less. The average particle size of the magnesium oxide may preferably be 0.5 µm or more, more preferably 1.0 µm or more, and still more preferably 1.5 µm or more, and may preferably be 50 µm or less, more preferably 40 µm or less, and still more preferably 35 µm or less. The average particle size of the magnesium oxide is in the above range facilitates the adjustment of the surface condition of the magnesium oxide, to enhance the moisture resistance, and to suppress the viscosity and torque when the magnesium oxide is mixed with a resin.

In Aspect II, the average particle size of the magnesium oxide may preferably be 0.5 µm or more and 10 µm or less, more preferably 1.0 µm or more and 8 µm or less, and still more preferably 1.5 µm or more and 5 µm or less. The average particle size of the magnesium oxide may preferably be 0.5 µm or more, more preferably 1.0 µm or more, and still more preferably 1.5 µm or more, and may preferably be 10 µm or less, more preferably 8 µm or less, and still more preferably 5 µm or less. The average particle size of the magnesium oxide is in the above range facilitates the adjustment of the surface condition of the magnesium oxide, to enhance the moisture resistance can be good, and to suppress the viscosity and torque when the magnesium oxide is mixed with a resin.

The average particle size of the magnesium oxide may preferably be 0.5 µm or more and 50 µm or less, more preferably 1.0 µm or more and 40 µm or less, and still more preferably 1.5 µm or more and 30 µm or less. The average particle size of the magnesium oxide may preferably be 0.5 µm or more, more preferably 1.0 µm or more, and still more preferably 1.5 µm or more, and may preferably be 50 µm or less, more preferably 40 µm or less, and still more preferably 30 µm or less.

In the present disclosure, the average particle size may be measured by the Microtrac method and may be a median diameter (D50) on a volume basis.

In Aspect I, the magnesium oxide preferably has a specific surface area of 0.01 m²/g or more and less than 1.3 m²/g and an average particle size of 0.5 µm or more and 50 µm or less; more preferably a specific surface area of 0.05 m²/g or more and 1.3 m²/g or less and an average particle size of 1.0 µm or more and 40 µm or less; and still more preferably a specific surface area of 0.1 m²/g or more and 1.0 m²/g or less and an average particle size of 1.5 µm or more and 30 µm or less.

In Aspect II, the magnesium oxide preferably has a specific surface area of 1.3 m²/g or more and 10 m²/g or less and an average particle size of 0.5 µm or more and 10 µm or less; more preferably a specific surface area of 1.3 m²/g or more and 5.0 m²/g or less and an average particle size of 1.0 µm or more and 8 µm or less; and still more preferably a specific surface area of 1.3 m²/g or more and 3.0 m²/g or less and an average particle size of 1.5 µm or more and 5 µm or less.

The magnesium oxide preferably has a specific surface area of 0.01 m²/g or more and 10 m²/g or less and an average particle size of 0.5 µm or more and 50 µm or less; more preferably a specific surface area of 0.05 m²/g or more and 5 m²/g or less and an average particle size of 1.0 µm or more and 40 µm or less; and still more preferably a specific surface area of 0.1 m²/g or more and 3 m²/g or less and an average particle size of 1.5 µm or more and 30 µm or less.

In Aspect I, the torque of the magnesium oxide measured by the following method is preferably 50 N·m or less, more preferably 45 N·m or less, and still more preferably 40 N·m or less, and may be, for example, 10 N·m or more, 15 Pa·s or more, or 20 N·m or more.

In Aspect II, the torque of the magnesium oxide measured by the following method is preferably 53 N·m or less, more preferably 50 N·m or less, still more preferably 45 N·m or less, and even more preferably 40 N·m or less, and may be, for example, 10 N·m or more, 15 Pays or more, or 20 N·m or more.

### [Method of torque measurement]

After an ethylene-octene-based polyolefin resin is heated to 120°C and kneaded for 10 minutes, the magnesium oxide is added to the ethylene-octene-based polyolefin resin such that a volume ratio of the ethylene-octene-based polyolefin resin to the magnesium oxide is 51 : 49;the mixture is further kneaded at 120°C for 15 minutes, and a torque thereof (N·m) is measured at a rotation speed of 30 rpm.

In this case, in Aspect I, the magnesium oxide preferably has a surface treatment layer, and the surface treatment layer is preferably formed using a surface treatment agent comprising a silane coupling agent. Such a silane coupling agent preferably comprises a compound represented by the formula (1) described later, and more preferably comprises a compound represented by the formula (I-1') described later.

In this case, in Aspect II, the magnesium oxide preferably has a surface treatment layer, and the surface treatment layer is preferably formed using a surface treatment agent comprising a silane coupling agent. Such a silane coupling agent preferably comprises a compound represented by the formula (1) described later, and more preferably comprises a compound represented by the formula (II-1') described later.

In Aspect I, the viscosity of the magnesium oxide measured by the following method (i) is preferably 70 Pa·s or less, more preferably 67 Pa·s or less, and still more preferably 65 Pa·s or less, and may be, for example, 10 Pa·s or more, 15 Pa·s or more, or 20 Pa·s or more.

In Aspect II, the viscosity of the magnesium oxide measured by the following method (i) is preferably 130 Pa·s or less, more preferably 120 Pa·s or less, and still more preferably 110 Pa·s or less, and may be, for example, 40 Pa·s or more, 50 Pa·s or more, or 60 Pa·s or more.

### [Method of viscosity measurement (i)]

A bisphenol-type epoxy resin and the magnesium oxide are mixed at a volume ratio of 70 : 30. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 25°C, a gap distance of 1 mm, a measurement shear rate range of 0 to 20 s⁻¹, and a measurement time of 20 seconds.

In this case, in Aspect I, the magnesium oxide preferably has a surface treatment layer, and the surface treatment layer is preferably formed using a surface treatment agent comprising a silane coupling agent. Such a silane coupling agent preferably comprises a compound represented by the formula (1) described later, and more preferably comprises a compound represented by the formula (I-1") described later.

In this case, in Aspect II, the magnesium oxide preferably has a surface treatment layer, and the surface treatment layer is preferably formed using a surface treatment agent comprising a silane coupling agent. Such a silane coupling agent preferably comprises a compound represented by the formula (1) described later, and more preferably comprises a compound represented by the formula (II-1") described later.

In Aspect I, the viscosity of the magnesium oxide measured by the following method (ii) is preferably 19 Pa·s or less, more preferably 18 Pa·s or less, and still more preferably 17 Pa·s or less, and may be, for example, 10 Pa·s or more, or 15 Pa·s or more.

In Aspect II, the viscosity of the magnesium oxide measured by the following method (ii) is preferably 27 Pa·s or less, more preferably 26 Pa·s or less, and still more preferably 25 Pa·s or less, and may be, for example, 10 Pa·s or more, 15 Pa·s or more, or 20 Pa·s or more.

### [Method of viscosity measurement (ii)]

A polyfunctional acrylic monomer and the magnesium oxide are mixed at a volume ratio of 60 : 40. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 23°C, a gap distance of 1 mm, a measurement shear rate range of 0 to 20 s⁻¹, and a measurement time of 20 seconds.

In this case, in Aspect I, the magnesium oxide of the present disclosure preferably has a surface treatment layer, and the surface treatment layer is preferably formed using a surface treatment agent comprising a silane coupling agent. Such a silane coupling agent preferably comprises a compound represented by the formula (1) described later, and more preferably comprises a compound represented by the formula (I-1") described later.

In this case, in Aspect II, the magnesium oxide of the present disclosure preferably has a surface treatment layer, and the surface treatment layer is preferably formed using a surface treatment agent comprising a silane coupling agent. Such a silane coupling agent preferably comprises a compound represented by the formula (1) described later, and more preferably comprises a compound represented by the formula (II-1") described later.

The magnesium oxide of the present disclosure suppresses the torque increase when mixed with a resin. The magnesium of the present disclosure also suppresses the viscosity increase when mixed with a resin. As a result, the load on an apparatus during the production can be reduced, and when a resin material comprising the magnesium oxide is liquid, increasing the fluidity thereof facilitates to inject the resin material into a closed space. When the resin material is solid, moldability is also expected to improve.

The magnesium oxide of the present disclosure preferably has a surface treatment layer on a surface thereof. That is, the magnesium oxide of the present disclosure may be a material including MgO and a surface treatment layer provided on a surface of the MgO. The MgO may preferably be MgO particles. The surface treatment layer covers at least a part of the surface of the MgO, and preferably covers the entire surface.

The surface treatment layer may preferably be formed using a surface treatment agent comprising a silane coupling agent.

The silane coupling agent may be a compound having a hydrolyzable silyl group and a monovalent organic group. The hydrolyzable silyl group represents a Si atom to which a hydroxy group or a hydrolyzable group is bonded.

The hydrolyzable group means a group capable of generating a silanol group by hydrolysis. Examples of a hydrolyzable group include -OR^{a1}, -OCOR^{a1}, halogen, and a hydrogen atom. R^{a1} represents a C₁₋₄ alkyl group, and may preferably be a methyl group or an ethyl group.

The monovalent organic group may be a monovalent group comprising a carbon atom, and may be a monovalent hydrocarbon group; or a group in which a monovalent or divalent hydrocarbon group and one or more selected from -O-, -CO-, - NR^{a2}-, and -SiR^{a3}₂- are combined. R^{a2} represents a C₁₋₄ alkyl group or hydrogen atom, and R^{a3} represents a C₁₋₆ hydrocarbon group. A divalent or higher valent organic group may be a group in which one or more hydrogen atoms contained in the monovalent organic group are replaced with a bond.

The monovalent hydrocarbon group is a monovalent group comprising carbon and hydrogen, and may be a group in which one hydrogen atom in a hydrocarbon compound is replaced with a bond. The hydrocarbon group may preferably be a C₁₋₃₀ hydrocarbon group, and may be any of an aliphatic hydrocarbon group, an alicyclic hydrocarbon group, an aromatic hydrocarbon group, and a group in which two or more selected from an aliphatic hydrocarbon group, an alicyclic hydrocarbon group, and an aromatic hydrocarbon group are combined. The aliphatic hydrocarbon group may be linear or branched, and may be either saturated or unsaturated. A divalent or higher valent hydrocarbon group may be a group in which one or more hydrogen atoms in the monovalent hydrocarbon group are replaced with a bond.

The molecular weight of the silane coupling agent may preferably be 130 or more and 10,000 or less, and more preferably 140 or more and 6,000 or less. The larger the molecular weight of the silane coupling agent is, the better the water resistance of the resulting magnesium oxide can be.

In the present disclosure, the molecular weight of a silane coupling agent having a molecular weight of less than 500 may be calculated on the basis of the structural formula of the silane coupling agent. The molecular weight of a silane coupling agent having a molecular weight of 500 or more means a weight average molecular weight, may be measured by gel permeation chromatography to be calculated as a converted value using polystyrene as a standard sample.

The silane coupling agent may preferably comprise a compound represented by the following formula (1):

R¹ₙ-Si(OR²)ₘ ··· (1)

in formula (1),
R¹ independently represents -L¹-R³,
L¹ independently represents a single bond or a divalent organic group,
R³ independently represents one selected from a group consisting of a C₁₋₃₀ alkyl group, a C₂₋₃₀ alkenyl group, a C₆₋₃₀ aromatic hydrocarbon group, and an -SiR⁴₃ group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

R¹ independently represents -L¹-R³.

L¹ independently represents a single bond or a divalent organic group.

Examples of the divalent organic group represented by L¹ include divalent hydrocarbon groups, and group in which a divalent hydrocarbon group and one or more selected from -O-, -CO-, -NR^{a2}, and -SiR^{a2}₂- are combined.

L¹ may preferably be represented by the following formulae (i) to (iv):

-R^{a4}-O-CO- ··· (i)

-R^{a4}-NR^{a2}- ··· (ii)

-R^{a4}-NR^{a2}-CO-O- ··· (iii)

-R^{a4}-NR^{a2}-CO-O-R^{a5}-(OR^{a6})ₚ₁-(OSiR^{a3}₂)ₚ₂- ··· (iv)

in formulae (i) to (iv),
R^{a2} represents a C₁₋₄ alkyl group or a hydrogen atom,
R^{a3} represents a C₁₋₆ hydrocarbon group,
R^{a4} represents a C₁₋₄ alkylene group,
R^{a5} represents a C₁₋₄ alkylene group,
R^{a6} represents a C₁₋₄ alkylene group,
p1 represents an integer of 1 to 5, and
p2 represents an integer of 2 to 100.

In formulae (i) to (iv), preferably, one end on the R^{a4} side is bonded to the Si atom in formula (1), and the other end is bonded to R³.

The C₁₋₄ alkyl group represented by R^{a2} may be linear or branched, and may preferably be a methyl group or an ethyl group. R^{a2} is preferably a hydrogen atom.

Examples of the C₁₋₆ hydrocarbon group represented by R^{a3} include a C₁₋₆ alkyl group and a phenyl group. The C₁₋₆ alkyl group may be linear or branched, and may preferably be a C₁₋₄ alkyl group, more preferably a methyl group or an ethyl group, and still more preferably a methyl group. R^{a3} is preferably a methyl group or a phenyl group.

The C₁₋₄ alkylene group represented by R^{a4} may be linear or branched, and may preferably be a C₂₋₃ alkylene group.

The C₁₋₄ alkylene group represented by R^{a5} may be linear or branched, and may preferably be a C₂₋₃ alkylene group.

The C₁₋₄ alkylene group represented by R^{a6} may be linear or branched, and may preferably be a C₂₋₃ alkylene group.

p1 represents an integer of 1 to 5 and may preferably be 1 to 3.

p2 represents an integer of 2 to 100, and may preferably be 5 to 80, and more preferably 10 to 70.

L¹ is preferably a single bond or a group represented by formula (i), (ii), (iii), or (iv), and more preferably a single bond or a group represented by formula (i), (ii), or (iv).

R³ represents one selected from a group consisting of a C₁₋₃₀ alkyl group, a C₂₋₃₀ alkenyl group, a C₆₋₃₀ aromatic hydrocarbon group, and -SiR⁴₃. In one aspect, R³ may preferably be one selected from a group consisting of a C₁₋₃₀ alkyl group and a C₂₋₃₀ alkenyl group. In another aspect, R³ may preferably be one selected from a group consisting of a C₂₋₃₀ alkenyl group and a C₆₋₃₀ aromatic hydrocarbon group.

The C₁₋₃₀ alkyl group represented by R³ may be linear or branched, and may preferably be branched. The C₁₋₃₀ alkyl group is preferably a linear or branched C₁₋₃₀ alkyl group, more preferably a linear or branched C₅₋₂₅ alkyl group, still more preferably a linear or branched C₁₀₋₂₀ alkyl group, and even more preferably a branched C₁₀₋₂₀ alkyl group.

The C₂₋₃₀ alkenyl group represented by R³ may be linear or branched. The C₂₋₃₀ alkenyl group is preferably a linear or branched C₂₋₁₅ alkenyl group, more preferably a linear or branched C₂₋₁₀ alkenyl group, still more preferably a linear or branched C₂₋₇ alkenyl group, and even more preferably a linear or branched C₂₋₄ alkenyl group.

The C₆₋₃₀ aromatic hydrocarbon group represented by R³ may be monocyclic or polycyclic, and may preferably be monocyclic. The C₆₋₃₀ aromatic hydrocarbon group is preferably a monocyclic or polycyclic C₆₋₂₀ aromatic hydrocarbon group, more preferably a monocyclic or polycyclic C₆₋₁₅ aromatic hydrocarbon group, still more preferably a monocyclic or polycyclic C₆₋₁₀ aromatic hydrocarbon group, and even more preferably a monocyclic C₆₋₈ aromatic hydrocarbon group. Examples of the aromatic hydrocarbon group represented by R³ include a phenyl group, a toluyl group, a xylyl group, a styryl group, and a naphthyl group.

Examples of the C₁₋₆ hydrocarbon group represented by R⁴ include a C₁₋₆ alkyl group and a phenyl group. The C₁₋₆ alkyl group may be linear or branched, and may preferably be a C₁₋₄ alkyl group, more preferably a methyl group or an ethyl group, and still more preferably a methyl group. R⁴ is preferably a methyl group or a phenyl group.

In one aspect, R³ is preferably one selected from a group consisting of a C₁₋₃₀ alkyl group, a C₂₋₃₀ alkenyl group, and an -SiR⁴₃ group.

In another aspect, R³ is preferably one selected from a group consisting of a C₁₋₃₀ alkyl group and a C₂₋₃₀ alkenyl group.

In still another aspect, R³ is preferably one selected from a group consisting of a C₂₋₃₀ alkenyl group and a C₆₋₃₀ aromatic hydrocarbon group.

In still another aspect, R³ is preferably one selected from a group consisting of a C₁₋₃₀ alkyl group and an -SiR⁴₃ group.

R² independently represents a C₁₋₄ alkyl group or a hydrogen atom. The C₁₋₄ alkyl group represented by R² may be linear or branched, and may preferably be a methyl group or an ethyl group. R² is preferably one or more selected from a methyl group, an ethyl group, and a hydrogen atom.

n represents an integer of 1 to 3, and may preferably be 1 or 2, and more preferably 1.

m represents an integer of 1 to 3, and may preferably be 2 or 3, and more preferably 3.

In one aspect, the silane coupling agent may preferably comprise a compound represented by the following formula (I-1'):

R¹ₙ-Si(OR²)ₘ ··· (I-1')

in formula (1'),
R¹ independently represents -L¹-R^{3I'},
L¹ independently represents a single bond or a divalent organic group,
R^{3I'} independently represents one selected from a group consisting of a C₁₋₃₀ alkyl group and a C₂₋₃₀ alkenyl group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

In another aspect, the silane coupling agent may preferably comprise a compound represented by the following formula (I-1"):

R¹ₙ-Si(OR²)ₘ ··· (I-1")

in formula (1"),
R¹ independently represents -L¹-R^{3I"},
L¹ independently represents a single bond or a divalent organic group,
R^{3I"} independently represents one selected from a group consisting of a C₂₋₃₀ alkenyl group and a C₆₋₃₀ aromatic hydrocarbon group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

In still another aspect, the silane coupling agent may preferably comprise a compound represented by the following formula (II-1'):

R¹ₙ-Si-(OR²)ₘ··· (II-1')

in formula (1'),
R¹ independently represents -L¹-R^{3II'},
L¹ independently represents a single bond or a divalent organic group,
R^{3II'} independently represents one selected from a group consisting of a C₁₋₃₀ alkyl group and an -SiR⁴₃ group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

In another aspect, the silane coupling agent may preferably comprise a compound represented by the following formula (II-1"):

R¹ₙ-Si-(OR²)ₘ··· (II-1")

in formula (1"),
R¹ independently represents -L¹-R^{3II"},
L¹ independently represents a single bond or a divalent organic group,
R^{3II"} independently represents one selected from a group consisting of a C₂₋₃₀ alkenyl group and a C₆₋₃₀ aromatic hydrocarbon group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

As the silane coupling agent, a commercially available product may be used, or a synthetic product may be used.

In the surface treatment agent, the content of the compound represented by the formula (1) may preferably be 80 mass% or more and 100 mass% or less, more preferably 90 mass% or more and 100 mass% or less, and still more preferably 95 mass% or more and 100 mass% or less in 100 mass% of the silane coupling agent.

In the surface treatment agent, the content of the silane coupling agent may preferably be 80 mass% or more and 100 mass% or less, more preferably 90 mass% or more and 100 mass% or less, and still more preferably 95 mass% or more and 100 mass% or less in 100 mass% of the surface treatment agent.

The surface treatment agent may comprise water, a catalyst, and the like in addition to the silane coupling agent. The catalyst may be an acid catalyst or a base catalyst. Examples of the acid catalyst include nitric acid, sulfuric acid, and acetic acid. Examples of the base catalyst include ammonia.

In Aspect I, in the magnesium oxide, a value rₛ represented by the following formula (2) is preferably 100% or more and 4,000% or less,
[Math 3] ${r}_{s} = \frac{{n}_{s} \left(mol\right) \times {N}_{A} \left({mol}^{- 1}\right) \times {S}_{s} \left({m}^{2}\right)}{{m}_{m} \left(g\right) \times {s}_{m} \left({m}^{2}⋅{g}^{- 1}\right)}$ in formula (2),
nₛ represents a substance amount (mol) of the silane coupling agent,
N_{A} represents an Avogadro number (mol⁻¹),
Sₛ represents an occupancy area (m²) of one molecule of the silane coupling agent,
mₘ represents an addition amount (g) of the magnesium oxide, and
sₘ represents a specific surface area (m²·g⁻¹) of the magnesium oxide.

In Aspect I, rₛ may preferably be 100% or more and 4,000% or less, more preferably 100% or more and 3,500% or less, and still more preferably 100% or more and 3,000% or less. rₛ may preferably be 100% or more, and may preferably be 4,000% or less, more preferably 3,500% or less, and still more preferably 3,000% or less. When the lower limit of rₛ is within the above range, the contact probability between the surface treatment agent and the magnesium oxide surface is expected to increase and the surface treatment reaction be promoted. On the other hand, when the upper limit of rₛ is within the above range, the addition amount of the silane coupling agent becomes appropriate with respect to the surface area of the magnesium oxide, the production cost may be suppressed, the thermal conductivity may be maintained even when the magnesium oxide is mixed with a resin, and bleeding out may also be suppressed.

In Aspect II, rₛ may preferably be 40% or more and 500% or less, more preferably 40% or more and 400% or less, and still more preferably 40% or more and 300% or less. rₛ may preferably be 40% or more, and may preferably be 500% or less, more preferably 400% or less, and still more preferably 300 or less. When the lower limit of rₛ is within the above range, the contact probability between the surface treatment agent and the magnesium oxide surface is expected to increase and the surface treatment reaction be promoted. On the other hand, when the upper limit of rₛ is within the above range, the addition amount of the silane coupling agent becomes appropriate with respect to the surface area of the magnesium oxide, the production cost may be suppressed, the thermal conductivity may be maintained even when the magnesium oxide is mixed with a resin, and bleeding out may also be suppressed.

rₛ may preferably be 40% or more and 210% or less, more preferably 50% or more and 200% or less, and still more preferably 70% or more and 150% or less. rₛ is preferably 40% or more, more preferably 50% or more, and still more preferably 70% or more, and preferably 210% or less, more preferably 200% or less, and still more preferably 150% or less.

rₛ can also be said to be the ratio of the area that can be covered with the entire amount of the silane coupling agent to the surface area of MgO to be subjected to surface treatment. When the lower limit of rₛ is within the above range, the coverage of MgO with the silane coupling agent may increase, and when the upper limit of rₛ is within the above range, the covering efficiency with the silane coupling agent may feasibly increase.

The occupancy area of one molecule of the silane coupling agent may be calculated on the basis of the area occupied by the Si-O- group bonding to MgO, and may be, for example, 13 × 10⁻²⁰ (m²).

The magnesium oxide having the surface treatment layer may be produced by a wet treatment.

Specifically, also included in the technical scope of the present disclosure is a method for producing magnesium oxide, comprising subjecting first magnesium oxide to a surface treatment using a surface treatment agent comprising a silane coupling agent to obtain second magnesium oxide having a surface treatment layer,
wherein the surface treatment is conducted by a wet treatment.

The silane coupling agent may be uniformly attached to the MgO surface by conducting the surface treatment by the wet treatment.

In the present disclosure, the wet treatment may mean a treatment in which a mixture comprising the object to be subjected to surface treatment and the surface treatment agent undergoes a slurry state. The slurry may be, for example, a mixed liquid having a solid component concentration of 10 mass% or more and 70 mass% or less, preferably 20 mass% or more and 65 mass% or less, and more preferably 30 mass% or more and 60 mass% or less.

In the present disclosure, the solid component of a mixed liquid means a heating residue after heating the mixed liquid at 105°C for 1 hour, and the solid component concentration means a value obtained by dividing the total mass of the heating residue by the total mass of the mixed liquid subjected to heating.

The surface treatment agent comprising the silane coupling agent has the same meaning as the surface treatment agent to be used for forming the surface treatment layer described above.

The first magnesium oxide may typically be magnesium oxide having no surface treatment layer, that is, MgO.

In Aspect I, the specific surface area of the first magnesium oxide may be 0.01 m²/g or more and less than 1.3 m²/g, preferably 0.05 m²/g or more and 1 m²/g or less, and more preferably 0.1 m²/g or more and 1.0 m²/g or less. The specific surface area of the first magnesium oxide may be 0.01 m²/g or more, preferably 0.05 m²/g or more, and more preferably 0.1 m²/g or more, and may be less than 1.3 m²/g, preferably 1 m²/g or less, and more preferably 1.0 m²/g or less. When the specific surface area of the first magnesium oxide is in the above range, it is easy to control the interface between the magnesium oxide particles with a surface treatment layer formed and the resin, and when the magnesium oxide particles are mixed with a resin, a reduced viscosity of the mixture can be attained.

In Aspect II, the specific surface area of the first magnesium oxide may preferably be 0.01 m²/g or more and 10 m²/g or less, more preferably 0.05 m²/g or more and 5.0 m²/g or less, and still more preferably 0.1 m²/g or more and 3.0 m²/g or less. The specific surface area of the first magnesium oxide may preferably be 0.01 m²/g or more, more preferably 0.05 m²/g or more, and still more preferably 0.1 m²/g or more, and may preferably be 10 m²/g or less, more preferably 5.0 m²/g or less, and still more preferably 3.0 m²/g or less.

The specific surface area of the first magnesium oxide may preferably be 0.01 m²/g or more and 10 m²/g or less, more preferably 0.05 m²/g or more and 5.0 m²/g or less, and still more preferably 0.1 m²/g or more and 3.0 m²/g or less. The specific surface area of the first magnesium oxide may preferably be 0.01 m²/g or more, more preferably 0.05 m²/g or more, and still more preferably 0.1 m²/g or more, and may preferably be 10 m²/g or less, more preferably 5.0 m²/g or less, and still more preferably 3.0 m²/g or less.

In Aspect I, the average particle size of the first magnesium oxide may preferably be 0.5 µm or more and 50 µm or less, more preferably 1.0 µm or more and 40 µm or less, and still more preferably 1.5 µm or more and 35 µm or less. The average particle size of the first magnesium oxide may preferably be 0.5 µm or more, more preferably 1.0 µm or more, and still more preferably 1.5 µm or more, and may preferably be 50 µm or less, more preferably 40 µm or less, and still more preferably 35 µm or less. When the average particle size of the first magnesium oxide is in the above range, it is easy to control the surface condition of the magnesium oxide, the resulting magnesium oxide particles having the surface treatment layer may have good moisture resistance, and when the magnesium oxide is mixed with a resin, the viscosity and torque may be reduced.

In Aspect II, the average particle size of the first magnesium oxide may preferably be 0.5 µm or more and 10 µm or less, more preferably 1.0 µm or more and 8 µm or less, and still more preferably 1.5 µm or more and 5 µm or less. The average particle size of the first magnesium oxide may preferably be 0.5 µm or more, more preferably 1.0 µm or more, and still more preferably 1.5 µm or more, and may preferably be 10 µm or less, more preferably 8 µm or less, and still more preferably 5 µm or less.

The average particle size of the first magnesium oxide may preferably be 0.5 µm or more and 50 µm or less, more preferably 1.0 µm or more and 40 µm or less, and still more preferably 1.5 µm or more and 30 µm or less. The average particle size of the first magnesium oxide may preferably be 0.5 µm or more, more preferably 1.0 µm or more, and still more preferably 1.5 µm or more, and may preferably be 50 µm or less, more preferably 40 µm or less, and still more preferably 30 µm or less.

The surface treatment agent may be used in an amount in which rₛ represented by the above formula (2) is preferably 40% or more and 210% or less, more preferably 50% or more and 200% or less, and still more preferably 70% or more and 150% or less.

In a preferred aspect, the production method may comprise:
mixing an organic solvent and first magnesium oxide to obtain a first mixed liquid;
mixing a surface treatment agent comprising a silane coupling agent and the first mixed liquid to obtain a second mixed liquid;
removing the organic solvent from the second mixed liquid to obtain a precursor of second magnesium oxide; and
heating and/or drying the precursor of second magnesium oxide to obtain second magnesium oxide having a surface treatment layer.

As the organic solvent, an organic solvent that may be mixed with the silane coupling agent or can dissolve the silane coupling agent is preferable.

The boiling point of the organic solvent may preferably be 70°C or more and 140°C or less, more preferably 75°C or more and 130°C or less, and still more preferably 80°C or more and 120°C or less. When the boiling point of the organic solvent is in the range, the stability of the surface treatment improves, and the subsequent heating and/or drying of the precursor may be easily conducted.

The organic solvent is preferably an alcohol solvent, and examples thereof include ethanol, isopropyl alcohol, and butanol.

In the first mixed liquid, the amount of the organic solvent may preferably be 50 parts by mass or more and 900 parts by mass or less, more preferably 60 parts by mass or more and 400 parts by mass or less, and still more preferably 70 parts by mass or more and 200 parts by mass or less per 100 parts by mass of the first magnesium oxide.

The first mixed liquid may further comprise water. The amount of the water may preferably be 0 parts by mass or more and 10 parts by mass or less, more preferably 0.01 parts by mass or more and 5 parts by mass or less, and still more preferably 0.05 parts by mass or more and 3 parts by mass or less per 100 parts by mass of the organic solvent contained in the first mixed liquid.

When the first mixed liquid comprises water, the order of mixing the organic solvent, the first magnesium oxide, and the water is not particularly limited. For example, after mixing an organic solvent and water, the resulting mixture and magnesium oxide may be further mixed, or after mixing an organic solvent and magnesium oxide, the resulting mixture and water may be further mixed, or an organic solvent, water, and magnesium oxide may be simultaneously mixed.

The mixing of the organic solvent and the first magnesium oxide can be conducted by, for example, a stirring treatment and/or an ultrasonic treatment. The stirring treatment may be executed using a magnetic stirrer and a mechanical stirrer. When a magnetic stirrer is used, it is easy to control stirring, and when a mechanical stirrer is used, the mixed liquid can be uniformly mixed even when the mixed liquid has a high viscosity. When the stirring treatment is conducted, a baffle board may be attached to the stirring tank. When the baffle board is attached, the stirring efficiency may increase. In addition, the agglomeration of the first magnesium oxide may be crushed by the ultrasonic treatment, and a more uniform mixed liquid may be obtained.

The preparation of the first mixed liquid may be conducted under a condition where the temperature of the first mixed liquid is preferably 10°C or more and 40°C or less, and more preferably 15°C or more and 30°C or less.

The surface treatment agent comprising the silane coupling agent has the same meaning as the surface treatment agent to be used for forming the surface treatment layer described above.

In Aspect I, the surface treatment agent may be used in an amount in which rₛ represented by the above formula (2) is preferably 100% or more and 4,000% or less, more preferably 100% or more and 3,500% or less, and still more preferably 100% or more and 3,000% or less. In addition, the surface treatment agent may be used in an amount in which rₛ is preferably 100% or more, and preferably 4,000% or less, more preferably 3,500% or less, and still more preferably 3,000% or less. When the lower limit of rₛ is within the above range, the contact probability between the surface treatment agent and the magnesium oxide surface is expected to increase and the surface treatment reaction be promoted. On the other hand, when the upper limit of rₛ is within the above range, the addition amount of the silane coupling agent becomes appropriate with respect to the surface area of the magnesium oxide, the production cost may be suppressed, the thermal conductivity may be maintained even when the magnesium oxide is mixed with a resin, and bleeding out may also be suppressed.

In Aspect II, the surface treatment agent may be used in an amount in which rₛ represented by the above formula (2) is preferably 100% or more and 500% or less, more preferably 100% or more and 400% or less, and still more preferably 100% or more and 300% or less. In addition, the surface treatment agent may be used in an amount in which rₛ is preferably 100% or more, and preferably 500% or less, more preferably 400% or less, and still more preferably 300% or less. When the lower limit of rₛ is within the above range, the contact probability between the surface treatment agent and the magnesium oxide surface is expected to increase and the surface treatment reaction be promoted. On the other hand, when the upper limit of rₛ is within the above range, the addition amount of the silane coupling agent becomes appropriate with respect to the surface area of the magnesium oxide, the production cost may be suppressed, the thermal conductivity may be maintained even when the magnesium oxide is mixed with a resin, and bleeding out may also be suppressed.

The surface treatment agent may be used in an amount in which rₛ represented by the above formula (2) is preferably 40% or more and 210% or less, more preferably 50% or more and 200% or less, and still more preferably 70% or more and 150% or less.

The first solution may be allowed to stand for a certain period of time before the surface treatment agent and the first mixed liquid are mixed. This operation is considered to facilitate more uniform mixing of the organic solvent and the first magnesium oxide.

The mixing of the surface treatment agent and the first mixed liquid may be conducted by the stirring treatment and/or the ultrasonic treatment. Mixing by the stirring treatment and/or the ultrasonic treatment conduct is considered to facilitate more uniform mixing, and enables the formation of a more uniform surface treatment layer in the second magnesium oxide to be obtained.

The preparation of the second mixed liquid may be conducted at a temperature at which the temperature of the second mixed liquid is equal to or higher than the melting point of the silane coupling agent and equal to or lower than the boiling point of the organic solvent, and specifically may be conducted under a condition where the temperature of the second mixed liquid is preferably 10°C or more and 40°C or less, and more preferably 15°C or more and 30°C or less. Mixing the surface treatment agent and the first mixed liquid at such a temperature is considered to facilitate more uniform stirring, and enables to form a more uniform surface treatment layer in the second magnesium oxide to be obtained.

Examples of the method for removing the organic solvent from the second mixed liquid include filtration, distillation, centrifugation, and freeze drying. By filtration, the removal of the organic solvent may be efficiently conducted. By distillation, it may be easy to remove only the organic solvent. By centrifugation, because of high ability to separate the solid component and the liquid, it is easy to remove the organic solvent even when the viscosity of the second mixed liquid is high. By freeze drying, it is easy to suppress aggregation of magnesium oxide.

The temperature at which the obtained precursor of second magnesium oxide is heated and/or dried is not particularly limited as long as the solvent can be dried and the temperature is not higher than the decomposition temperature of the silane coupling agent. The temperature at which the precursor of second magnesium oxide is heated and/or dried may preferably be 80°C or more and 250°C or less, more preferably 100°C or more and 220°C or less, and still more preferably 120°C or more and 200°C or less. The time for which the precursor of second magnesium oxide is heated and/or dried may preferably be 30 minutes or more and 48 hours or less, and more preferably 1 hour or more and 24 hours or less. By heating and/or drying the precursor under such conditions, a reaction between the silane coupling agent and the magnesium oxide proceeds, and a surface treatment layer can be formed.

The heating and/or drying may be conducted using, for example, a hot air dryer, a microwave dryer, or a rotary dryer. Hot air dryers have high versatility, and may perform heating and drying with high efficiency. Rotary dryers are suitable for heating and drying a large amount of the precursor with high efficiency. Since microwave dryers do not require a high-temperature heat source, it is easy to suppress energy consumption.

The magnesium oxide of the present disclosure may be produced by a method different from the production method in the above-described embodiment, and the method for producing the magnesium oxide of the present disclosure is not limited only to those that provide the magnesium oxide described above.

The magnesium oxide may be preferably used as a thermally conductive material, particularly as a heat dissipation filler. The heat dissipation filler is mixed with a resin material, a rubber material, or the like to form a heat dissipation member. Examples of the resin material include thermoplastic resins such as polyolefin-based resins, polyamide resins, and polyphenylene sulfide resins, and thermosetting resins such as epoxy resins, phenol resins, silicone resins, urea resins, melamine resins, and unsaturated polyesters. Examples of the rubber material include silicone rubber, butyl rubber, butadiene rubber, acrylic rubber, ethylene propylene rubber, urethane rubber, and urethane rubber silicone resin.

In a composition comprising magnesium oxide and a resin material and/or a rubber material, the volume ratio of the magnesium oxide to the total of the resin material and/or the rubber material and the magnesium oxide (magnesium oxide/(resin material and/or rubber material + magnesium oxide)) may preferably be 1 or more and 90 or less, more preferably 5 or more and 60 or less, and still more preferably 10 or more and 50 or less.

In Aspect I, the torque of the composition measured by the following method is preferably 50 N·m or less, more preferably 45 N·m or less, and still more preferably 40 N·m or less, and may be, for example, 10 N·m or more, 15 Pa·s or more, or 20 N·m or more.

In Aspect II, the torque of the composition measured by the following method is preferably 53 N·m or less, more preferably 50 N·m or less, still more preferably 45 N·m or less, and even more preferably 40 N·m or less, and may be, for example, 10 N·m or more, 15 Pa·s or more, or 20 N·m or more.

### [Method of torque measurement]

After an ethylene-octene-based polyolefin resin is heated to 120°C and kneaded for 10 minutes; the magnesium oxide is added to the ethylene-octene-based polyolefin resin such that a volume ratio of the ethylene-octene-based polyolefin resin to the magnesium oxide is 51 : 49; the mixture is further kneaded at 120°C for 15 minutes, and a torque thereof (N·m) is measured at a rotation speed of 30 rpm.

In Aspect I, the viscosity of the composition measured by the following method (i) is preferably 70 Pa·s or less, more preferably 67 Pa·s or less, and still more preferably 65 Pa·s or less, and may be, for example, 10 Pa·s or more, 15 Pa·s or more, or 20 Pa·s or more.

In Aspect II, the viscosity of the composition measured by the following method (i) is preferably 130 Pa·s or less, more preferably 120 Pa·s or less, and still more preferably 110 Pa·s or less, and may be, for example, 40 Pa·s or more, 50 Pa·s or more, or 60 Pa·s or more.

### [Method of viscosity measurement (i)]

A bisphenol-type epoxy resin and the magnesium oxide are mixed at a volume ratio of 70 : 30. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 25°C, a gap distance of 1 mm, a measurement shear rate range of 0 to 20 s⁻¹, and a measurement time of 20 seconds.

In Aspect I, the viscosity of the composition measured by the following method (ii) is preferably 19 Pa·s or less, more preferably 18 Pa·s or less, and still more preferably 17 Pa·s or less, and may be, for example, 10 Pa·s or more, or 15 Pa·s or more.

In Aspect II, the viscosity of the composition measured by the following method (ii) is preferably 27 Pa·s or less, more preferably 26 Pa·s or less, and still more preferably 25 Pa·s or less, and may be, for example, 10 Pa·s or more, 15 Pa·s or more, or 20 Pa·s or more.

### [Method of viscosity measurement (ii)]

A polyfunctional acrylic monomer and the magnesium oxide are mixed at a volume ratio of 60 : 40. The resulting mixture is stirred at 25°C for 1 hour at a rotation speed of 500 rpm to afford a resin composition. Using a rheometer, and using a disposable parallel plate having a diameter of 25 mm and a disposable cup having a diameter of 80 mm, a viscosity (Pa·s) of the resin composition is measured at a temperature of 23°C, a gap distance of 1 mm, a measurement shear rate range of 0 to 20 s⁻¹, and a measurement time of 20 seconds.

The polyfunctional acrylic monomer may be any compound having two or more (meth)acryloyl groups in one molecule, and examples thereof include bifunctional (meth)acrylic monomers such as ethylene glycol di(meth)acrylate, propylene glycol di(meth)acrylate, neopentyl glycol di(meth)acrylate, 1,6-hexanediol di(meth)acrylate, 1,9-nonanediol di(meth)acrylate, 1,10-decanediol di(meth)acrylate, diethylene glycol di(meth)acrylate, and tetraethylene glycol di(meth)acrylate; tri- or higher functional (meth)acrylic monomers such as trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, and ditrimethylolpropane tetra(meth)acrylate. Among them, tri- or higher functional (meth)acrylic monomers are preferable, and pentaerythritol tri(meth)acrylate and pentaerythritol tetra(meth)acrylate are preferable.

The molecular weight of the polyfunctional acrylic monomer is preferably 150 or more and 800 or less, and more preferably 250 or more and 400 or less.

The magnesium oxide of the present disclosure can suppress an increase in torque and/or viscosity when being mixed with a resin. As a result, the load on the apparatus when the resin composition or the heat dissipation material is produced can be reduced, and the moldability of the resin material comprising the magnesium oxide is expected to improve.

In such a heat dissipation member, the magnesium oxide may be used alone as a heat dissipation filler, or the magnesium oxide and one or more other fillers selected from a metal hydroxide, a metal oxide, and a metal nitride may be used in combination. The heat dissipation filler and other fillers to be used for a heat dissipation member may or may not be surface-treated. That is, these heat dissipation fillers and other fillers may or may not have a surface treatment layer. The shapes and particle sizes of the heat dissipation filler and other fillers are not particularly limited. Wet-treatment of the heat dissipation filler using the magnesium oxide of the present disclosure may improve durability (thermal conductivity maintainability) of the heat dissipation member, and the mixing characteristics of the heat dissipation filler with a resin (viscosity/torque at the time of mixing is reduced), so that a large amount of the heat dissipation filler can be filled/mixed. As a result, the load on the apparatus during the production may be reduced, and the thermal conductivity may increase.

Examples of the heat dissipation member include TIM materials such as a heat dissipation sheet, a heat dissipation pad, a phase change sheet, a heat dissipation tape, a heat dissipation gap filler, a heat dissipation adhesive, a heat dissipation grease, and a sealing material; and heat dissipation substrates such as a heat dissipation insulating sheet, and a ceramic base circuit board. Such TIM materials and heat dissipation substrates may be used for devices such as automobiles (in particular, inverters, ECUs, LiBs, and the like), mobile devices such as smartphones, communication devices, communication bases, electrical appliances (in particular, inverters and the like), and LEDs.

The magnesium oxide may also be used as a filler of a compound. The filler is mixed with a resin or other additives and then used to form a compound. Examples of the resin include thermoplastic resins such as polyolefin-based resins, polyamide resins, and polyphenylene sulfide resins, and thermosetting resins such as epoxy resins, phenol resins, silicone resins, urea resins, melamine resins, and unsaturated polyesters.

### Examples

The present disclosure will be described more specifically with reference to the following examples, but the present disclosure is not limited thereto.

### (Synthesis Example 1: Silane coupling agent A)

A 100 mL round-bottom flask was charged with 22.5 parts by weight of 3-isocyanatopropyltriethoxysilane and 45.3 parts by weight of 1-dodecanol (TCI), and the mixture was stirred at 60°C for 6 hours, affording silane coupling agent A having an alkyl chain at an end. (Molecular weight (MW): 433)

### (Synthesis Example 2: Silane coupling agent B)

A 100 mL round-bottom flask was charged with 22.5 parts by weight of 3-isocyanatopropyltriethoxysilane and 45.3 parts by weight of 2-butyloctanol (TCI), and the mixture was stirred at 60°C for 6 hours, affording silane coupling agent B having an alkyl chain at an end. (Molecular weight (MW): 433)

### (Synthesis Example 3: Silane coupling agent C)

A 100 mL round-bottom flask was charged with 10.3 parts by weight of 3-isocyanatopropyltriethoxysilane and 50.0 parts by weight of Silaplane FM-0411 (manufactured by JNC Corporation, terminal OH-terminated dimethylpolysiloxane, Mn: 1000), and the mixture was stirred at 60°C for 6 hours, affording silane coupling agent C having an alkyl chain at an end. (Weight average molecular weight (Mw): 1247)

### (Synthesis Example 4: Silane coupling agent D)

A 100 mL round-bottom flask was charged with 2.6 parts by weight of 3-isocyanatopropyltriethoxysilane and 50.0 parts by weight of Silaplane FM-0421 (manufactured by JNC Corporation, terminal OH-terminated dimethylpolysiloxane, Mn: 5000), and the mixture was stirred at 60°C for 6 hours, affording silane coupling agent D having an alkyl chain at an end. (Weight average molecular weight (Mw): 5247)

### (Example I-1)

To a 1 L round-bottom flask, 400 parts by weight of isopropanol and 200 parts by weight of magnesium oxide (B) were added, and the mixture was stirred at 30°C and 800 rpm for 1 hour. 0.3 parts by weight of the silane coupling agent A was added while maintaining stirring, and the mixture was further stirred for 1 hour under the same conditions. After stirring, isopropanol was removed, affording magnesium oxide whose surface was covered with the silane coupling agent. The magnesium oxide obtained was heated in a dryer at 120°C for 6 hours to advance a curing reaction, thereby preparing magnesium oxide whose surface coating was completed by a wet method.
(rₛ: 136%, particle size (D50) of surface-treated magnesium oxide: 24.1 µm, specific surface area of surface-treated magnesium oxide: 0.2 m²/g)

### (Examples I-2 to I-8, Comparative Examples I-3 and I-5)

Using each of the compositions of Tables 1 and 2, magnesium oxides whose surface coating was completed by a wet method were prepared, respectively, through the same steps as in Example I-1.

In Tables 1 and 2, magnesium oxide (A) represents magnesium oxide having a specific surface area of 1.6 m²/g and an average particle size of 2.5 µm, and magnesium oxide (B) represents magnesium oxide having a specific surface area of 0.2 m²/g and an average particle size of 25 µm. IPA represents isopropyl alcohol.

Silane coupling agent E represents dodecyltriethoxysilane, silane coupling agent F represents octadecyltriethoxysilane, silane coupling agent G represents vinyltriethoxysilane (KBE-1003 manufactured by Shin-Etsu Chemical Co., Ltd.), silane coupling agent H represents 3-methacryloxypropyltriethoxysilane (KBE-503 manufactured by Shin-Etsu Chemical Co., Ltd.), silane coupling agent I represents decyltrimethoxysilane (KBM-3103C manufactured by Shin-Etsu Chemical Co., Ltd.), silane coupling agent J represents N-phenyl-3-aminopropyltrimethoxysilane (KBM-573 manufactured by Shin-Etsu Chemical Co., Ltd.), and silane coupling agent K represents 3-glycidoxypropyltrimethoxysilane (KBM-403 manufactured by Shin-Etsu Chemical Co., Ltd.).

### (Comparative Examples I-1 and I-2)

Magnesium oxide without surface treatment was used.

### (Comparative Example I-4)

200 parts by weight of the magnesium oxide (B) was placed in a Henschel mixer, and 0.2 parts by weight of the silane coupling agent I was gradually added with stirring. After completion of the addition, the mixture was heated at 150°C for 30 minutes, affording magnesium oxide whose surface coating was completed by a dry method.

Magnesium oxide obtained in each of Examples and Comparative Examples of Aspect I was evaluated by the following method.

### (Measurement of particle size)

The particle size was measured with a laser diffraction/scattering type particle size distribution analyzer MT3300EXII manufactured by MicrotracBEL Corporation. Ethanol was used as the solvent. As pretreatment before measurement, ethanol and a measurement sample were mixed, and the sample was dispersed in ethanol by an ultrasonic treatment.

### (Measurement of specific surface area)

The specific surface area was measured with a specific surface area/pore size distribution analyzer BELsorp-max manufactured by MicrotracBEL Corporation.

### (Dyne value)

As solutions having a known dyne value, mixed liquids for wet tension test No. 25.4, No. 30.0, No. 35.0, No. 40.0, No. 45.0, No. 50.0 (manufactured by FUJIFILM Wako Pure Chemical Corporation) and water were prepared. To 2 mL of each liquid adjusted to 25°C, 0.01 parts by weight of the magnesium oxide prepared in each of Examples and Comparative Examples was added, and the lowest dyne value at which all the added particles floated on the liquid surface was defined as the dyne value of the surface-coated magnesium oxide.

### (Moisture resistance test)

3.0 g of a sample was placed in a weighing bottle, and left in a thermo-hygrostat at a temperature of 85°C and a humidity of 85% for 1 week, and then a weight change before and after the test was measured. To compare particles having different particle sizes and specific surface areas side by side, values obtained by dividing the weight change rate by the specific surface area were also recorded.

**[Table 1]**

| | | Example | | | | | | | |
|---|---|---|---|---|---|---|---|---|---|
| | | I-1 | I-2 | I-3 | I-4 | I-5 | I-6 | I-7 | I-8 |
| MgO | Magnesium oxide (A) | | | | | | | | |
| | Magnesium oxide (B) | 200 | 200 | 200 | 200 | 200 | 200 | 200 | 200 |
| Surface treatment agent | Silane coupling agent A | 0.3 | | | | | | | |
| | Silane coupling agent D | | 2.7 | | | | | | |
| | Silane coupling agent G | | | 0.2 | | | | | |
| | Silane coupling agent H | | | | 0.3 | | | | |
| | Silane coupling agent I | | | | | 0.2 | 0.2 | | |
| | Silane coupling agent J | | | | | | | 0.2 | 4.6 |
| Solvent | Isopropyl alcohol | 400 | 400 | 400 | 400 | 400 | 400 | 400 | 400 |
| Synthesis method | | Wet | Wet | Wet | Wet | Wet | Wet | Wet | Wet |
| rₛ | | 136% | 101% | 206% | 202% | 149% | 1637% | 153% | 3529% |
| Physical properties | Average particle size (µm) | 24.1 | 27.3 | 24.6 | 26.3 | 25.0 | 24.7 | 26.0 | 25.3 |
| | Specific surface area (m²/g) | 0.2 | 0.2 | 0.2 | 0.2 | 0.2 | 0.2 | 0.2 | 0.2 |
| | Dyne value (mN/m) | 40 | 25.4 | 45 | 45 | 40 | 40 | 45 | 45 |
| | Weight change rate in moisture resistance test (%) | 0.10% | 0.01% | 0.96% | 0.77% | 0.12% | 0.10% | 0.27% | 0.21% |
| | Weight change rate in moisture resistance test/specific surface area (%) | 0.50% | 0.05% | 4.80% | 3.85% | 0.60% | 0.50% | 1.35% | 1.05% |

**[Table 2]**

| | | Comparative Example | | | | |
|---|---|---|---|---|---|---|
| | | I-1 | I-2 | I-3 | I-4 | I-5 |
| MgO | Magnesium oxide (A) | 200 | | 200 | | |
| | Magnesium oxide (B) | | 200 | | 200 | 300 |
| Surface treatment agent | Silane coupling agent A | | | | | |
| | Silane coupling agent D | | | | | |
| | Silane coupling agent G | | | 0.8 | | |
| | Silane coupling agent H | | | | | |
| | Silane coupling agent I | | | | 0.2 | 0.1 |
| | Silane coupling agent J | | | | | |
| Solvent | Isopropyl alcohol | | | 400 | 400 | 400 |
| Synthesis method | | Untreated | Untreated | Wet | Dry | Wet |
| rₛ | | | | 103% | 149% | 50% |
| Physical properties | Average particle size (µm) | 2.5 | 26.0 | 2.4 | 25.1 | 26.4 |
| | Specific surface area (m²/g) | 1.6 | 0.2 | 1.7 | 0.2 | 0.2 |
| | Dyne value (mN/m) | > 72 | > 72 | 35 | 50 | 50 |
| | Weight change rate in moisture resistance test (%) | 13.50% | 1.94% | 1.12% | 1.02% | 1.20% |
| | Weight change rate in moisture resistance test/specific surface area (%) | 8.44% | 9.70% | 0.66% | 5.10% | 6.00% |

Examples I-1 to I-8 are examples of Aspect I, and it was confirmed that the moisture resistance was good.

All of Comparative Examples I-1 to I-2 and I-4 to I-5 are examples with dyne values of 45 mN/m or more, and the moisture resistance was not sufficiently satisfactory.

Comparative Examples I-1 and I-3 were examples with specific surface areas of 1.3 m²/g or more, and the moisture resistance was not sufficiently satisfactory.

### (Example I-9)

24 parts by weight of ENGAGE 8200 (manufactured by DOW, ethylene-octene-based polyolefin resin, MFR: 5 g/10min, Mooney Viscosity (121°C): 8 MU, glass transition temperature: -53°C) was fed into a Plasti-Corder manufactured by Brabender, and heated to 120°C and kneaded for 10 minutes, whereby the resin was softened. 96 parts by weight of the magnesium oxide obtained in Example 3 was added to the softened resin, and the mixture was kneaded for 15 minutes to prepare a resin composition in which MgO was dispersed. The torque detected after kneading for 15 minutes was defined as the torque of the resin composition.

### (Example I-10, Comparative Examples I-6 and I-7)

Resin compositions were obtained in the same manner as in Example 9 except that the magnesium oxides shown in Table 3 were used instead of the magnesium oxide obtained in Example 3 in Example 9, and the torque was measured.

**[Table 3]**

| | | | Example | | Comparative Example | |
|---|---|---|---|---|---|---|
| | | | I-9 | I-10 | I-6 | 1-7 |
| Resin | ENGAGE 8200 | parts by weight | 24 | 24 | 24 | 24 |
| MgO | Magnesium oxide of Example I-3 | parts by weight | 96 | | | |
| | Magnesium oxide of Example I-5 | parts by weight | | 96 | | |
| | Magnesium oxide of Comparative Example I-1 | parts by weight | | | 96 | |
| | Magnesium oxide of Comparative Example I-2 | parts by weight | | | | 96 |
| Volume fraction of magnesium oxide | | vol% | 49 | 49 | 49 | 49 |
| Torque | | N·m | 49 | 39 | 60 | 54 |

Examples I-9 and I-10 are examples of Aspect I, and the torque of the mixtures of the magnesium oxides mixed with the resin was suppressed.

Comparative Example I-6 is an example in which the magnesium oxide had a dyne value exceeding 50 mN/m and a specific surface area of 1.3 m²/g or more, and the torque of the mixture of the magnesium oxide mixed with the resin was not sufficiently suppressed.

Comparative Example I-7 is an example in which the magnesium oxide had a dyne value exceeding 50 mN/m, and the torque of the mixture of the magnesium oxide mixed with the resin was not sufficiently suppressed.

### (Example 1-11)

A 50 mL glass bottle was charged with 25 parts by weight of jER-828 (bisphenol A type epoxy resin manufactured by Mitsubishi Chemical Corporation, viscosity at 25°C: 12 to 15 Pa·s, epoxy equivalent: 184 to 194 g/eq) and 33 parts by weight of the magnesium oxide prepared in Example 3, and the mixture was stirred at 25°C and 500 rpm for 1 hour, affording a resin composition in which the magnesium oxide was dispersed.

The resin composition obtained was subjected to viscosity measurement. Specifically, a Φ25 mm disposable parallel plate and a Φ80 mm disposable cup were mounted on a rheometer (MCR series) manufactured by Anton Paar Japan K.K., and viscosity measurement was conducted under the following conditions to evaluate viscosity at 1 s⁻¹.

### Measurement conditions:

Measurement mode: Continuous ramp measurement
Temperature: 25°C
Gap distance: 1 mm
Measurement shear rate range: 0 to 20 s⁻¹
Measurement time: 20s

(Example I-12, Comparative Examples I-8 to I-10)

Resin compositions were obtained in the same manner as in Example 11 except that the magnesium oxides shown in Table 4 were used instead of the magnesium oxide obtained in Example I-3 in Example I-11. The resin composition obtained was subjected to viscosity measurement under the same conditions as in Example 11.

**[Table 4]**

| | | | Example | | Comparative Example | | |
|---|---|---|---|---|---|---|---|
| | | | I-11 | I-12 | I-8 | I-9 | I-10 |
| Resin | jER-828 | parts by weight | 25 | 25 | 25 | 25 | 25 |
| MgO | Magnesium oxide of Example I-3 | parts by weight | 33 | | | | |
| | Magnesium oxide of Example I-7 | parts by weight | | 33 | | | |
| | Magnesium oxide of Comparative Example I-1 | parts by weight | | | 33 | | |
| | Magnesium oxide of Comparative Example I-2 | parts by weight | | | | 33 | |
| | Magnesium oxide of Comparative Example I-3 | parts by weight | | | | | 33 |
| Volume fraction of magnesium oxide | | vol% | 30 | 30 | 30 | 30 | 30 |
| Viscosity | | Pa·s | 43 | 65 | 133 | 72 | 76 |

Examples I-11 and I-12 are examples of Aspect I, and the viscosity of the mixture mixed with the resin was suppressed.

Comparative Example I-8 is an example in which the magnesium oxide had a dyne value of 50 mN/m or more and a specific surface area of 1.3 m²/g or more, and the viscosity of the mixture of the magnesium oxide mixed with the resin was not sufficiently suppressed.

Comparative Example I-9 is an example in which the magnesium oxide had a dyne value of 50 mN/m or more, and the viscosity of the mixture of the magnesium oxide mixed with the resin was not sufficiently suppressed.

Comparative Example I-10 is an example with a specific surface area of 1.3 m²/g or more, and the viscosity of the mixture of the magnesium oxide mixed with the resin was not sufficiently suppressed.

### (Example I-13)

A 50 mL glass bottle was charged with 10 parts by weight of ARONIX M-306 (manufactured by Toagosei Co., Ltd., polyfunctional acrylic monomer, viscosity at 25°C: 0.45 to 0.75 Pa·s) as a polyfunctional acrylic monomer and 20.3 parts by weight of the magnesium oxide prepared in Example 3, and the mixture was stirred at 25°C and 500 rpm for 1 hour, affording a resin composition in which the magnesium oxide was dispersed. The volume ratio of the polyfunctional acrylic monomer to the magnesium oxide was 60 : 40.

The resin composition obtained was subjected to viscosity measurement. Specifically, a Φ25 mm disposable parallel plate and a Φ80 mm disposable cup were mounted on a rheometer (MCR series) manufactured by Anton Paar Japan K.K., and viscosity measurement was conducted under the following conditions to evaluate viscosity at 1 s⁻¹.

### Measurement conditions:

Measurement mode: Continuous ramp measurement
Temperature: 23°C
Gap distance: 1 mm
Measurement shear rate range: 0 to 20 s⁻¹
Measurement time: 20s

### (Example I-12, Comparative Examples I-8 to 1-10)

Resin compositions were obtained in the same manner as in Example I-11 except that the magnesium oxides shown in Table 5 were used instead of the magnesium oxide obtained in Example I-3 in Example I-11. The resin compositions obtained were subjected to viscosity measurement under the same conditions as in Example I-11.

**[Table 5]**

| | | | Example | | | Comparative Example | | |
|---|---|---|---|---|---|---|---|---|
| | | | I-13 | I-14 | I-15 | I-11 | I-12 | I-13 |
| Resin | ARONIX M-306 | parts by weight | 10 | 10 | 10 | 10 | 10 | 10 |
| MgO | Magnesium oxide of Example I-3 | parts by weight | 20.3 | | | | | |
| | Magnesium oxide of Example I-4 | parts by weight | | 20.3 | | | | |
| | Magnesium oxide of Example I-7 | parts by weight | | | 20.3 | | | |
| | Magnesium oxide of Comparative Example I-1 | parts by weight | | | | 20.3 | | |
| | Magnesium oxide of Comparative Example I-2 | parts by weight | | | | | 20.3 | |
| | Magnesium oxide of Comparative Example I-3 | parts by weight | | | | | | 20.3 |
| Volume fraction of magnesium oxide | | vol% | 40 | 40 | 40 | 40 | 40 | 40 |
| Viscosity | | Pa·s | 17 | 13 | 16 | 32 | 20 | 25 |

Examples I-13, I-14, and I-15 are examples of Aspect I, and the viscosity in the cases of being mixed with the resin was suppressed.

Comparative Example I-11 is an example in which the magnesium oxide had a dyne value of 50 mN/m or more and a specific surface area of 1.3 m²/g or more, and the viscosity of the mixture of the magnesium oxide mixed with the resin was not sufficiently suppressed.

Comparative Example I-12 is an example in which the magnesium oxide had a dyne value of 50 mN/m or more, and the viscosity of the mixture of the magnesium oxide mixed with the resin was not sufficiently suppressed.

Comparative Example I-13 is an example with a specific surface area of 1.3 m²/g or more, and the viscosity of the mixture of the magnesium oxide mixed with the resin was not sufficiently suppressed.

### (Examples II-1 to II-15, Comparative Examples II-2 and II-7)

Using the compositions of Tables 6 and 7, magnesium oxides whose surface coating was completed by a wet method were prepared, respectively, through the same steps as in Example I-1.

In Tables 6 and 7, magnesium oxide (A) represents magnesium oxide having a specific surface area of 1.6 m²/g and an average particle size of 2.5 µm. IPA represents isopropyl alcohol.

In addition, silane coupling agent E represents dodecyltriethoxysilane, silane coupling agent F represents octadecyltriethoxysilane, silane coupling agent G represents vinyltriethoxysilane (KBE-1003 manufactured by Shin-Etsu Chemical Co., Ltd.), silane coupling agent H represents 3-methacryloxypropyltriethoxysilane (KBE-503 manufactured by Shin-Etsu Chemical Co., Ltd.), silane coupling agent I represents decyltrimethoxysilane (KBM-3103C manufactured by Shin-Etsu Chemical Co., Ltd.), silane coupling agent J represents N-phenyl-3-aminopropyltrimethoxysilane (KBM-573 manufactured by Shin-Etsu Chemical Co., Ltd.), and silane coupling agent K represents 3-glycidoxypropyltrimethoxysilane (KBM-403 manufactured by Shin-Etsu Chemical Co., Ltd.).

### (Comparative Example II-1)

Magnesium oxide without surface treatment was used.

### (Comparative Example II-3)

200 parts by weight of the magnesium oxide (A) was placed in a Henschel mixer, and 1.8 parts by weight of the silane coupling agent A was gradually added with stirring. After completion of the addition, the mixture was heated at 150°C for 30 minutes, affording magnesium oxide whose surface coating was completed by a dry method.

### (Comparative Examples II-4 to II-6)

Using the compositions of Table 7, magnesium oxides whose surface coating was completed by a dry method were prepared, respectively, through the same steps as in Comparative Example II-3.

Magnesium oxide obtained in each of Examples and Comparative Examples was evaluated by the following method.

### (Measurement of particle size)

The particle size was measured with a laser diffraction/scattering type particle size distribution analyzer MT3300EXII manufactured by MicrotracBEL Corporation. Ethanol was used as the solvent. As pretreatment before measurement, ethanol and a measurement sample were mixed, and the sample was dispersed in ethanol by an ultrasonic treatment.

### (Measurement of specific surface area)

The specific surface area was measured with a specific surface area/pore size distribution analyzer BELsorp-max manufactured by MicrotracBEL Corporation.

### (Dyne value)

As solutions having a known dyne value, mixed liquids for wet tension test No. 25.4, No. 30.0, No. 35.0, No. 40.0, No. 45.0, No. 50.0 (manufactured by FUJIFILM Wako Pure Chemical Corporation) and water were prepared. To 2 mL of each liquid adjusted to 25°C, 0.01 parts by weight of the magnesium oxide prepared in each of Examples and Comparative Examples was added, and the lowest dyne value at which all the added particles floated on the liquid surface was defined as the dyne value of the surface-coated magnesium oxide.

### (Moisture resistance test)

3.0 g of a sample was placed in a weighing bottle, and left in a thermo-hygrostat at a temperature of 85°C and a humidity of 85% for 1 week, and then the weight change before and after the test was measured. To compare particles having different particle sizes and specific surface areas on the same basis, values obtained by dividing the weight change rate by the specific surface area were also recorded.

**[Table 6]**

| | | Example | | | | | | | | | | | | | | | |
|---|---|---|---|---|---|---|---|---|---|---|---|---|---|---|---|---|---|
| | | II-1 | II-2 | II-3 | II-4 | II-5 | II-6 | II-7 | II-8 | II-9 | II-10 | II-11 | II-12 | II-13 | II-14 | II-15 | II-16 |
| MgO | Magnesium oxide (A) | 200 | 200 | 200 | 200 | 200 | 200 | 200 | 200 | 200 | 200 | 200 | 200 | 200 | 200 | 200 | 200 |
| Surface treatment agent | Silane coupling agent A | 1.8 | | | | | | | | 0.9 | 3.5 | | | | | | |
| | Silane coupling agent B | | 1.8 | | | | | | | | | | | | | | |
| | Silane coupling agent C | | | 5.1 | | | | | | | | 2.6 | | | | | |
| | Silane coupling agent D | | | | 21.5 | | | | | | | | | | | | |
| | Silane coupling agent E | | | | | 1.4 | | | | | | | | | | | |
| | Silane coupling agent F | | | | | | 1.5 | | | | | | | | | | |
| | Silane coupling agent G | | | | | | | 0.8 | | | | | | | | | |
| | Silane coupling agent H | | | | | | | | 1.2 | | | | | | | | |
| | Silane coupling agent I | | | | | | | | | | | | 1.08 | 2.16 | | | |
| | Silane coupling agent J | | | | | | | | | | | | | | 1.08 | 2.17 | 4.43 |
| | Silane coupling agent K | | | | | | | | | | | | | | | | |
| Solvent | Isopropyl alcohol | 400 | 400 | 400 | 400 | 400 | 400 | 400 | 400 | 400 | 400 | 400 | 400 | 40 | 400 | 400 | 400 |
| Synthesis method | | Wet | Wet | Wet | Wet | Wet | Wet | Wet | Wet | Wet | Wet | Wet | Wet | Wet | Wet | Wet | Wet |
| rₛ | | 102% | 102% | 100% | 100% | 103% | 88% | 103% | 1101% | 51% | 198% | 51% | 100% | 200% | 103% | 208% | 422% |
| Physical properties | Average particle size (µm) | 2.5 | 2.7 | 2.4 | 2.5 | 2.4 | 2.3 | 2.4 | 2.6 | 2.5 | 2.5 | 2.4 | 2.4 | 2.6 | 3.0 | 2.9 | 2.7 |
| | Specific surface area (m²/g) | 1.6 | 1.7 | 1.6 | 1.3 | 1.5 | 1.6 | 1.7 | 1.4 | 1.6 | 1.5 | 1.4 | 2.0 | 1.9 | 1.6 | 1.8 | 1.6 |
| | Dyne value (mN/m) | 35 | 35 | 30 | 25.4 | 35 | 35 | 35 | 35 | 40 | 30 | 35 | 35 | 35 | 35 | 35 | 35 |
| | Weight change rate in moisture resistance test (%) | 0.09% | 0.15% | 0.04% | 0.02% | 0.08% | 0.10% | 0.14% | 0.11% | 1.54% | 0.09% | 1.04% | 0.21% | 0.16% | 0.58% | 0.51% | 0.43% |
| | Weight change rate in moisture resistance test/specific surface area (%) | 0.06% | 0.09% | 0.03% | 0.02% | 0.05% | 0.06% | 0.08% | 0.08% | 0.96% | 0.06% | 0.74% | 0.11% | 0.08% | 0.36% | 0.28% | 0.27% |

**[Table 7]**

| | | Comparative Example | | | | | | |
|---|---|---|---|---|---|---|---|---|
| | | II-1 | II-2 | II-3 | II-4 | II-5 | II-6 | II-7 |
| MgO | Magnesium oxide (A) | 200 | 200 | 200 | 200 | 200 | 200 | 200 |
| Surface treatment agent | Silane coupling agent A | | 0.5 | 1.8 | 3.5 | | | |
| | Silane coupling agent B | | | | | | | |
| | Silane coupling agent C | | | | | | | |
| | Silane coupling agent D | | | | | | | |
| | Silane coupling agent E | | | | | | | |
| | Silane coupling agent F | | | | | | | |
| | Silane coupling agent G | | | | | 2.0 | | |
| | Silane coupling agent H | | | | | | | |
| | Silane coupling agent I | | | | | | | |
| | Silane coupling agent J | | | | | | 1.08 | |
| | Silane coupling agent K | | | | | | | 0.97 |
| Solvent | Isopropyl alcohol | 400 | 400 | 400 | 400 | 400 | 400 | 400 |
| Synthesis method | | Untreated | Wet | Dry | Dry | Dry | Dry | Wet |
| rₛ | | | 28% | 102% | 198% | 257% | 103% | 101% |
| Physical properties | Average particle size (µm) | 2.5 | 2.8 | 2.4 | 2.5 | 2.2 | 3.1 | 3.4 |
| | Specific surface area (m²/g) | 1.6 | 1.5 | 1.6 | 1.4 | 1.5 | 1.8 | 1.6 |
| | Dyne value (mN/m) | > 72 | 50 | 45 | 45 | 45 | 45 | 45 |
| | Weight change rate in moisture resistance test (%) | 13.50% | 8.99% | 8.28% | 3.91% | 5.06% | 2.06% | 8.93% |
| | Weight change rate in moisture resistance test/specific surface area (%) | 8.44% | 5.99% | 5.18% | 2.79% | 3.37% | 1.14% | 5.58% |

Examples II-1 to II-16 are examples of Aspect II, and it was confirmed that the moisture resistance was good.

All of Comparative Examples II-1 to II-7 are examples with dyne values of 45 mN/m or more, and the moisture resistance was not sufficiently satisfactory.

### (Example II-17)

24 parts by weight of ENGAGE 8200 (manufactured by DOW, ethylene-octene-based polyolefin resin, MFR: 5 g/10min, Mooney Viscosity (121°C): 8 MU, glass transition temperature: -53°C) was fed into a Plasti-Corder manufactured by Branbender, and heated to 120°C and kneaded for 10 minutes, whereby the resin was softened. 96 parts by weight of the magnesium oxide obtained in Example II-1 were added to the softened resin, and the mixture was kneaded for 15 minutes to prepare a resin composition in which MgO was dispersed. The torque detected after kneading for 15 minutes was defined as the torque of the resin composition.

### (Example II-18, Comparative Examples II-8 to II-9)

Resin compositions were obtained in the same manner as in Example 17 except that the magnesium oxides shown in Table 8 were used instead of the magnesium oxide obtained in Example II-1 in Example 17, and the torque was measured.

**[Table 8]**

| | | | Example | | Comparative Example | |
|---|---|---|---|---|---|---|
| | | | II-17 | II-18 | II-8 | II-9 |
| Resin | ENGAGE 8200 | parts by weight | 24 | 24 | 24 | 24 |
| MgO | Magnesium oxide of Example II-1 | parts by weight | 96 | | | |
| | Magnesium oxide of Example II-11 | parts by weight | | 96 | | |
| | Magnesium oxide of Comparative Example II-1 | parts by weight | | | 96 | |
| | Magnesium oxide of Comparative Example II-7 | parts by weight | | | | 96 |
| Volume fraction of magnesium oxide | | vol% | 49 | 49 | 49 | 49 |
| Torque | | N·m | 40 | 43 | 60 | 54 |

Examples II-17 and II-18 are examples of Aspect II, and the torque of the mixtures in the cases of being mixed with the resin was suppressed.

Comparative Examples II-8 to II-9 are examples in which the magnesium oxides had dyne values of 45 mN/m or more, and the torque of the mixtures of the magnesium oxides mixed with the resin was not sufficiently suppressed.

### (Example II-19)

A 50 mL glass bottle was charged with 25 parts by weight of jER-828 (bisphenol A type epoxy resin manufactured by Mitsubishi Chemical Corporation, viscosity at 25°C: 12 to 15 Pa·s, epoxy equivalent: 184 to 194 g/eq) and 33 parts by weight of the magnesium oxide prepared in Example II-7, and the mixture was stirred at 25°C and 500 rpm for 1 hour, affording a resin composition in which the magnesium oxide was dispersed.

The resin composition obtained was subjected to viscosity measurement. Specifically, a Φ25 mm disposable parallel plate and a Φ80 mm disposable cup were mounted on a rheometer (MCR series) manufactured by Anton Paar Japan K.K., and viscosity measurement was conducted under the following conditions to evaluate viscosity at 1 s⁻¹.

### Measurement conditions:

Measurement mode: Continuous ramp measurement
Temperature: 25°C
Gap distance: 1 mm
Measurement shear rate range: 0 to 20 s⁻¹
Measurement time: 20s

### (Examples II-20 to II-21, Comparative Examples II-10 to II-12)

Resin compositions were obtained in the same manner as in Example II-19 except that the magnesium oxides shown in Table 9 were used instead of the magnesium oxide obtained in Example II-7 in Example II-19. The resin compositions obtained were subjected to viscosity measurement under the same conditions as in Example II-19.

**[Table 9]**

| | | | Example | | | Comparative Example | | |
|---|---|---|---|---|---|---|---|---|
| | | | II-19 | II-20 | II-21 | II-10 | II-11 | II-12 |
| Resin | jER-828 | parts by weight | 25 | 25 | 25 | 25 | 25 | 25 |
| MgO | Magnesium oxide of Example II-7 | parts by weight | 33 | | | | | |
| | Magnesium oxide of Example II-14 | parts by weight | | 33 | | | | |
| | Magnesium oxide of Example II-15 | parts by weight | | | 33 | | | |
| | Magnesium oxide of Comparative Example II-1 | parts by weight | | | | 33 | | |
| | Magnesium oxide of Comparative Example II-6 | parts by weight | | | | | 33 | |
| | Magnesium oxide of Comparative Example II-7 | parts by weight | | | | | | 33 |
| Volume fraction of magnesium oxide | | vol% | 30 | 30 | 30 | 30 | 30 | 30 |
| Viscosity | | Pa·s | 76 | 115 | 98 | 133 | 144 | 135 |

Examples II-1 to II-21 are examples of Aspect II, and the viscosity in the cases of being mixed with the resin was suppressed.

Comparative Examples II-10 to II-12 are examples in which the magnesium oxides had dyne values of 45 mN/m or more, and the viscosity of the mixtures of the magnesium oxides mixed with the resin was not sufficiently suppressed.

### (Example II-22)

A 50 mL glass bottle was charged with 10 parts by weight of ARONIX M-306 (manufactured by Toagosei Co., Ltd., polyfunctional acrylic monomer, viscosity at 25°C: 0.45 to 0.75 Pa·s) as a polyfunctional acrylic monomer and 20.3 parts by weight of the magnesium oxide prepared in Example II-7, and the mixture was stirred at 25°C and 500 rpm for 1 hour, affording a resin composition in which the magnesium oxide was dispersed. The volume ratio of the polyfunctional acrylic monomer to the magnesium oxide was 60 : 40.

The resin composition obtained was subjected to viscosity measurement. Specifically, a Φ25 mm disposable parallel plate and a Φ80 mm disposable cup were mounted on a rheometer (MCR series) manufactured by Anton Paar Japan K.K., and viscosity measurement was conducted under the following conditions to evaluate viscosity at 1 s⁻¹.

### Measurement conditions:

Measurement mode: Continuous ramp measurement
Temperature: 23°C
Gap distance: 1 mm
Measurement shear rate range: 0 to 20 s⁻¹
Measurement time: 20s

### (Examples II-23 to II-24, Comparative Examples II-13 to II-14)

Resin compositions were obtained in the same manner as in Example II-22 except that the magnesium oxides shown in Table 10 were used instead of the magnesium oxide obtained in Example II-7 in Example II-22. The resin compositions obtained were subjected to viscosity measurement under the same conditions as in Example II-22.

**[Table 10]**

| | | | Example | | | Comparative Example | | |
|---|---|---|---|---|---|---|---|---|
| | | | II-22 | II-23 | II-24 | II-13 | II-14 | II-15 |
| Resin | ARONIX M-306 | parts by weight | 10 | 10 | 10 | 10 | 10 | 10 |
| MgO | Magnesium oxide of Example II-7 | parts by weight | 20.3 | | | | | |
| | Magnesium oxide of Example II-8 | parts by weight | | 20.3 | | | | |
| | Magnesium oxide of Example II-14 | parts by weight | | | 20.3 | | | |
| | Magnesium oxide of Comparative Example II-1 | parts by weight | | | | 20.3 | | |
| | Magnesium oxide of Comparative Example II-6 | parts by weight | | | | | 20.3 | |
| | Magnesium oxide of Comparative Example II-7 | parts by weight | | | | | | 20.3 |
| Volume fraction of magnesium oxide | | vol% | 40 | 40 | 40 | 40 | 40 | 40 |
| Viscosity | | Pa·s | 25 | 23 | 24 | 32 | 29 | 28 |

Examples II-22 to II-24 are examples of Aspect II, and the viscosity in the cases of being mixed with the resin was suppressed.

Comparative Examples II-10 to II-12 are examples in which the magnesium oxides had dyne values of 45 mN/m or more, and the viscosity of the mixtures of the magnesium oxides mixed with the resin was not sufficiently suppressed.

### INDUSTRIAL APPLICABILITY

The magnesium oxide of the present invention is preferably used as a thermally conductive material, particularly as a heat dissipation filler. The heat dissipation filler is mixed with a resin material, rubber, or the like to form a heat dissipation member.

Examples of the heat dissipation member include TIM materials such as a heat dissipation sheet, a heat dissipation pad, a phase change sheet, a heat dissipation tape, a heat dissipation gap filler, a heat dissipation adhesive, a heat dissipation grease, and a sealing material; and heat dissipation substrates such as a heat dissipation insulating sheet, and a ceramic base circuit board. Such TIM materials and heat dissipation substrates can be used for devices such as automobiles (in particular, inverters, ECUs, LiBs, and the like), mobile devices such as smartphones, communication devices, communication bases, electrical appliances (in particular, inverters and the like), and LEDs.

## Claims

1. Magnesium oxide having a dyne value of less than 50 mN/m and
a specific surface area of 0.01 m²/g or more and less than 1.3 m²/g.

2. The magnesium oxide ofclaim 1, having an average particle size of 0.5 µm or more and 50 µm or less.

3. The magnesium oxide of claim 1 or 2, comprising a surface treatment layer, wherein the surface treatment layer is formed using a surface treatment agent comprising a silane coupling agent.

4. The magnesium oxide of claim 3, wherein
the silane coupling agent comprises a compound represented by the following formula (1):
R¹ₙ-Si(OR²)ₘ ··· (1)
in formula (1),
R¹ independently represents -L¹-R³,
L¹ independently represents a single bond or a divalent organic group,
R³ independently represents one selected from a group consisting of a C₁₋₃₀ alkyl group, a C₂₋₃₀ alkenyl group, a C₆₋₃₀ aromatic hydrocarbon group, and an -SiR⁴₃ group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

5. The magnesium oxide of claim 3 or 4, wherein
a value rₛ represented by the following formula (2) is 100% or more and 4,000% or less,
[Math 1] ${r}_{s} = \frac{{n}_{s} \left(mol\right) \times {N}_{A} \left({mol}^{- 1}\right) \times {S}_{s} \left({m}^{2}\right)}{{m}_{m} \left(g\right) \times {s}_{m} \left({m}^{2}⋅{g}^{- 1}\right)}$ in formula (2),
nₛ represents a substance amount (mol) of the silane coupling agent,
N_{A} represents an Avogadro number (mol⁻¹),
Sₛ represents an occupancy area (m²) of one molecule of the silane coupling agent,
mₘ represents an addition amount (g) of the magnesium oxide, and
sₘ represents a specific surface area (m²·g⁻¹) of the magnesium oxide.

6. Magnesium oxide having a torque of 50 N·m or less as measured by the following method:
[Method of torque measurement]
After an ethylene-octene-based polyolefin resin is heated to 120°C and kneaded for 10 minutes; the magnesium oxide is added to the ethylene-octene-based polyolefin resin such that a volume ratio of the ethylene-octene-based polyolefin resin to the magnesium oxide is 51 : 49; the mixture is further kneaded at 120°C for 15 minutes, and a torque thereof (N·m) is measured at a rotation speed of 30 rpm.

7. The magnesium oxide of claim 6, comprising a surface treatment layer, wherein
the surface treatment layer is formed by using a surface treatment agent comprising a silane coupling agent, and
the silane coupling agent comprises a compound represented by the following formula (1):
R¹ₙ-Si(OR²)ₘ ··· (1)
in formula (1),
R¹ independently represents -L¹-R³,
L¹ independently represents a single bond or a divalent organic group,
R³ independently represents one selected from a group consisting of a C₁₋₃₀ alkyl group, a C₂₋₃₀ alkenyl group, a C₆₋₃₀ aromatic hydrocarbon group, and an -SiR⁴₃ group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

8. Magnesium oxide having a viscosity of 70 Pa·s or less as measured by the following method:
[Method of viscosity measurement]
A bisphenol-type epoxy resin and the magnesium oxide are mixed at a volume ratio of 70 : 30; a resulting mixture is stirred at 25°C for 1 hour at a rotation speed of 500 rpm to afford a resin composition; using a rheometer, and using a disposable parallel plate having a diameter of 25 mm and a disposable cup having a diameter of 80 mm, a viscosity (Pa·s) of the resin composition is measured at a temperature of 25°C, a gap distance of 1 mm, a measurement shear rate range of 0 to 20 s⁻¹, and a measurement time of 20 seconds.

9. The magnesium oxide of claim 8, comprising a surface treatment layer, wherein
the surface treatment layer is formed by using a surface treatment agent comprising a silane coupling agent, and
the silane coupling agent comprises a compound represented by the following formula (1):
R¹n-Si(OR²)ₘ ··· (1)
in formula (1),
R¹ independently represents -L¹-R³,
L¹ independently represents a single bond or a divalent organic group,
R³ independently represents one selected from a group consisting of a C₁₋₃₀ alkyl group, a C₂₋₃₀ alkenyl group, a C₆₋₃₀ aromatic hydrocarbon group, and an -SiR⁴₃ group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

10. Magnesium oxide having a viscosity of 19 Pa·s or less as measured by the following method:
[Method of viscosity measurement]
A polyfunctional acrylic monomer and the magnesium oxide are mixed at a volume ratio of 60 : 40; a resulting mixture is stirred at 25°C for 1 hour at a rotation speed of 500 rpm to afford a resin composition; using a rheometer, and using a disposable parallel plate having a diameter of 25 mm and a disposable cup having a diameter of 80 mm, a viscosity (Pa·s) of the resin composition is measured at a temperature of 23°C, a gap distance of 1 mm, a measurement shear rate range of 0 to 20 s⁻¹, and a measurement time of 20 seconds.

11. The magnesium oxide of claim 10, comprising a surface treatment layer, wherein
the surface treatment layer is formed by using a surface treatment agent comprising a silane coupling agent, and
the silane coupling agent comprises a compound represented by the following formula (1):
R¹ₙ-Si(OR²)ₘ ··· (1)
in formula (1),
R¹ independently represents -L¹-R³,
L¹ independently represents a single bond or a divalent organic group,
R³ independently represents one selected from a group consisting of a C₁₋₃₀ alkyl group, a C₂₋₃₀ alkenyl group, a C₆₋₃₀ aromatic hydrocarbon group, and an -SiR⁴₃ group,
R⁴ independently represents a C₁₋₆ hydrocarbon group,
R² independently represents a C₁₋₄ alkyl group or a hydrogen atom,
n represents an integer of 1 to 3, and
m represents an integer of 1 to 3.

12. A method for producing magnesium oxide, comprising subjecting first magnesium oxide to a surface treatment using a surface treatment agent comprising a silane coupling agent to obtain second magnesium oxide having a surface treatment layer, wherein
the surface treatment is conducted by a wet treatment.

13. The method for producing magnesium oxide of claim 12, wherein
the surface treatment is conducted by a treatment method comprising:
mixing an organic solvent and first magnesium oxide to obtain a first mixed liquid;
mixing the surface treatment agent and the first mixed liquid to obtain a second mixed liquid;
removing the organic solvent from the second mixed liquid to obtain a precursor of second magnesium oxide; and
heating and/or drying the precursor of second magnesium oxide to obtain second magnesium oxide having a surface treatment layer.

14. A heat dissipation member comprising the magnesium oxide of any one of claims 1 to 11.
